# EUROPEAN PATENT APPLICATION

(11) **EP 4 701 175 A1**
(43) Date of publication of application: **25.02.2026**
(21) Application number: 25193903.9
(22) Date of filing: 04.08.2025
(51) Int. Cl.: H04N 1/00, H04N 1/32, G06F 16/51, H04N 5/76, H04N 21/00

(54) **TRANSFER APPARATUS, SYSTEM, METHOD, AND STORAGE MEDIUM WITH SORTING FEATURE**

(30) Priority: 23.08.2024 JP 2024143133
(71) Applicant: Canon Kabushiki Kaisha, Tokyo, 146-8501 (JP)
(72) Inventor: TAMAGAWA, Kei, Tokyo, 146-8501 (JP)
(74) Representative: Canon Europe Limited

(57) **Abstract**

A transfer apparatus that receives data transmitted from a terminal and transfers the data to a management apparatus for managing the data, the transfer apparatus includes a transfer setting holding unit configured to hold a transfer setting to the management apparatus, a transfer sorting setting holding unit configured to hold a transfer sorting setting of the data, a storage destination determination unit configured to determine a storage destination of the data based on the transfer setting and the transfer sorting setting, and a transfer unit configured to transfer the data to a predetermined storage destination based on the transfer setting and the transfer sorting setting.

## Description

### Technical Field

The present disclosure relates to a transfer apparatus, a system, a method, and a storage medium.

### BACKGROUND

Conventionally, a transfer service that receives images transmitted from a terminal, such as a camera, a smartphone, or a personal computer (hereinafter, abbreviated as "PC"), and transfers the images to a storage service has been used by a camera user or a smartphone user. Recent cameras and smartphones with improved portability, increased storage capacity, and improved performance of continuous image capturing can easily capture a large number of images. For this reason, some camera users and smartphone users desire to manage images in an appropriately-sorted state.

Japanese Patent No. 6881153, Japanese Patent Laid-Open Publication No. 2024-54267, and Japanese Patent Laid-Open Publication No. 2009-303073 describe techniques of sorting data.

Japanese Patent No. 6881153 describes a technique of creating a folder for each facsimile circuit number in a file server, and storing data received from a facsimile, into the corresponding folder.

Japanese Patent Laid-Open Publication No. 2024-54267 describes a technique of holding a table in which facsimile circuit numbers as transmission sources and storage destination folder names are associated with each other, and sorting data received from a facsimile with reference to the table.

Japanese Patent Laid-Open Publication No. 2009-303073 describes a technique related to sorting storing. More specifically, a table in which months (January, February, etc.) and typical event names (New Year's Holidays, coming-of-age ceremony, etc.) of the months are associated with each other, and an event name is presented to a user with reference to the table, based on a month in which a received image is captured. Then, the user is prompted to select an event name, whereby a storage destination folder name is determined.

By using these techniques, data sorting is able to be performed.

However, each storage service has its own feature. For this reason, a sorting method desired by users varies among storage services. Nevertheless, in the conventional techniques, a detailed sorting method adapted to the feature of each storage service has not been provided.

### SUMMARY

For this reason, the user has been unable to perform image sorting suitable for the feature of each storage service.

The present disclosure has been devised to solve the above-described issue, and is directed to providing of a transfer apparatus, a system, a method, and a program that enable images to be transferred to a storage destination suitable for a storage service feature of each storage service.

The present disclosure in its first aspect provides a transfer apparatus as specified in claim 1. Optional features of one or each aspect(s) are specified in or derivable from claims 2 to 18.

The present disclosure in its second aspect provides a transfer system as specified in claim 19.

The present disclosure in its third aspect provides a transfer method as specified in claim 20.

The present disclosure in its fourth aspect provides a storage medium as specified in claim 21.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of a transfer system.
Fig. 2 is a diagram illustrating an example of a system configuration of the transfer system.
Fig. 3 is a diagram illustrating an example of a hardware configuration of an information processing apparatus.
Fig. 4 is a diagram illustrating an example of a hardware configuration of an imaging apparatus.
Fig. 5 is a diagram illustrating an example of a logical configuration of the transfer system.
Fig. 6 is a diagram illustrating an example of an overall sequence of the transfer system.
Figs. 7A to 7D are diagrams each illustrating an example of a table that is managed by a transfer apparatus.
Figs. 8A to 8D are diagrams each illustrating an example of a table that is managed by the transfer apparatus.
Figs. 9A to 9C are diagrams each illustrating an example of a table that is managed by the transfer apparatus.
Figs. 10A to 10C are diagrams each illustrating an example of a screen for receiving a setting related to sorting.
Fig. 11A and 11B are diagrams each illustrating an example of a screen for receiving a setting related to transfer.
Figs. 12A and 12B are diagrams each illustrating an example of the screen for receiving the setting related to transfer.
Fig. 13A to 13D are diagrams each illustrating an example of a screen for receiving the setting related to transfer.
Figs. 14A and 14B are diagrams illustrating an example of a sequence from sorting completion to transfer history registration in the transfer apparatus.
Fig. 15 is a diagram illustrating an example of a sequence starting from a transfer management unit in a case of transferring an image to a first management apparatus.
Figs. 16A and 16B are diagrams illustrating an example of a folder determination sequence.
Figs. 17A and 17B are diagrams illustrating an example of a folder creation trial sequence.
Fig. 18 is a diagram illustrating an example of a folder creation sequence.
Figs. 19A and 19B are diagrams illustrating an example of a sequence starting from the transfer management unit in a case of transferring an image to a second management apparatus.
Fig. 20 is a diagram illustrating an example of an image transfer sequence.
Fig. 21 is a diagram illustrating an example of the folder creation sequence.
Figs. 22A and 22B are diagrams illustrating an example of a folder creation request sequence.
Fig. 23 is a diagram illustrating an example of a result folder creation sequence.
Figs. 24A and 24B are diagrams illustrating an example of a sequence starting from the transfer management unit in a case of transferring an image to a third management apparatus.
Fig. 25 is a diagram illustrating an example of the folder creation sequence.
Figs. 26A and 26B are diagrams illustrating an example of the folder creation sequence.
Fig. 27 is a diagram illustrating an example of the folder creation sequence.
Fig. 28 is a diagram illustrating an example of an asset creation sequence.
Figs. 29A and 29B are diagrams illustrating an example of an image transfer sequence.
Figs. 30A and 30B are diagrams illustrating an example of a sequence starting from the transfer management unit in a case of transferring an image to a fourth management apparatus.
Figs. 31A and 31B are a diagram illustrating an example of the image transfer sequence.
Figs. 32A and 32B are a diagram illustrating an example of a folder association sequence.
Fig. 33 is a diagram illustrating an example of a sequence of operation of image addition to a folder.
Figs. 34A and 34B are a diagram illustrating an example of a folder creation and image addition sequence.
Fig. 35 is a diagram illustrating an example of a sequence of designating an image ID and a folder name, creating a folder, and adding an image.
Fig. 36 is a diagram illustrating an example of a sequence from the transfer management unit in a case of transferring an image to a fifth management apparatus.
Fig. 37 is a diagram illustrating an example of an effect that is obtained in the case of transferring an image to the first management apparatus.
Fig. 38 is a diagram illustrating an example of an effect that is obtained in the case of transferring an image to the second management apparatus.
Fig. 39 is a diagram illustrating an example of an effect that is obtained in the case of transferring an image to the third management apparatus.
Fig. 40 is a diagram illustrating an example of an effect that is obtained in the case of transferring an image to the fourth management apparatus.
Fig. 41 is a diagram illustrating an example of an effect that is obtained in the case of transferring an image to the fifth management apparatus.

### DESCRIPTION OF THE EMBODIMENTS

Hereinafter, the present disclosure will be described in detail with reference to the accompanying drawings, based on desirable embodiments thereof. It should be noted that the configurations described in the following embodiments are merely examples, and the present disclosure is not limited solely to the illustrated configurations and configurations discussed below.

### <Embodiment>

An Embodiment of the present disclosure will now be described below.

### <Image of Transfer System 100>

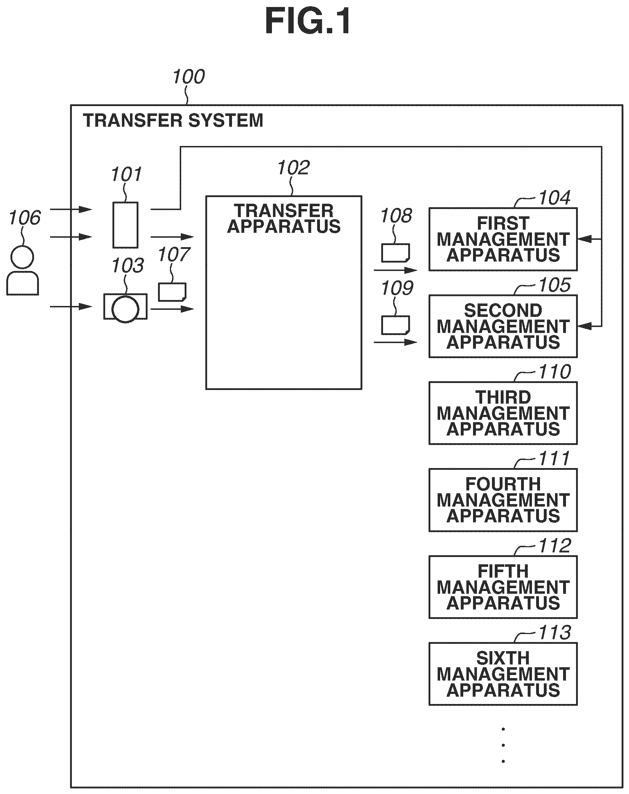

Fig. 1 is an image diagram of a transfer system 100 according to an embodiment of the present disclosure.

As illustrated in Fig. 1, the transfer system 100 includes a terminal 101, a transfer apparatus 102, an imaging apparatus 103, a first management apparatus 104, a second management apparatus 105, a third management apparatus 110, a fourth management apparatus 111, a fifth management apparatus 112, and a sixth management apparatus 113. While the present embodiment, and other embodiments discussed below, make reference to a plurality of management apparatuses, the invention may comprise one or more management apparatus(es).

A user 106 uses the transfer system 100 by operating the terminal 101 and the imaging apparatus 103. The user 106 has accounts of the respective management apparatuses.

The terminal 101 has a communication function and is able to communicate with the transfer apparatus 102 and each management apparatus.

The transfer apparatus 102 has a communication function and is able to communicate with the terminal 101, the imaging apparatus 103, and each management apparatus.

The imaging apparatus 103 has a communication function and is able to communicate with the transfer apparatus 102.

An image 107 is an image transmitted from the imaging apparatus 103 to the transfer apparatus 102.

An image 108 is an image transmitted from the transfer apparatus 102 to the first management apparatus 104. Its original image is the image 107.

An image 109 is an image transmitted from the transfer apparatus 102 to the second management apparatus 105. Its original image is the image 107.

### <System Configuration of Transfer System 100>

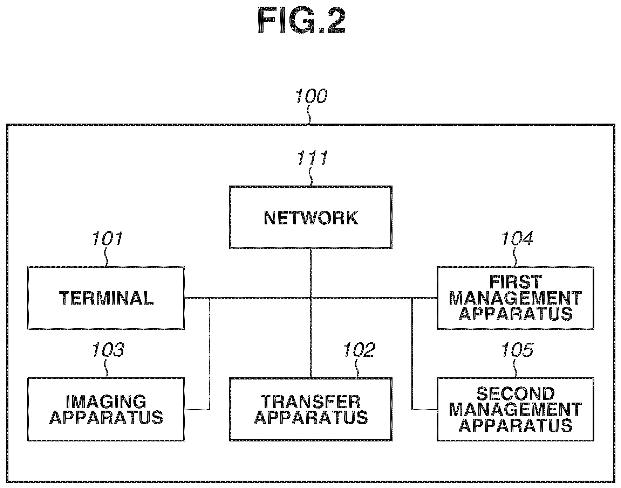

Fig. 2 is a diagram illustrating a system configuration of the transfer system 100 according to an embodiment of the present disclosure.

As illustrated in Fig. 2, the transfer system 100 includes the terminal 101, the transfer apparatus 102, the imaging apparatus 103, the management apparatuses 104, 105 and others, and a network 111.

The terminal 101, the transfer apparatus 102, and the imaging apparatus 103 are connected via the network 111. The network 111 is implemented by a local area network (LAN) or the internet, for example, and enables connected devices to communicate with each other. The description will be given of a case in which the terminal 101 is a smartphone or a table, but the terminal 101 is not limited to this, and may be any terminal, such as a PC having a communication function, as long as the terminal is able to transmit images to the transfer apparatus 102. The description will be given of a case in which the imaging apparatus 103 is a digital camera having a communication function, but the imaging apparatus 103 is not limited to this, and may be any imaging apparatus, such as an interchangeable-lens digital camera having a communication function, or a compact digital camera, as long as the imaging apparatus has an image capturing function.

### <Hardware Configuration of Information Processing Apparatus 200>

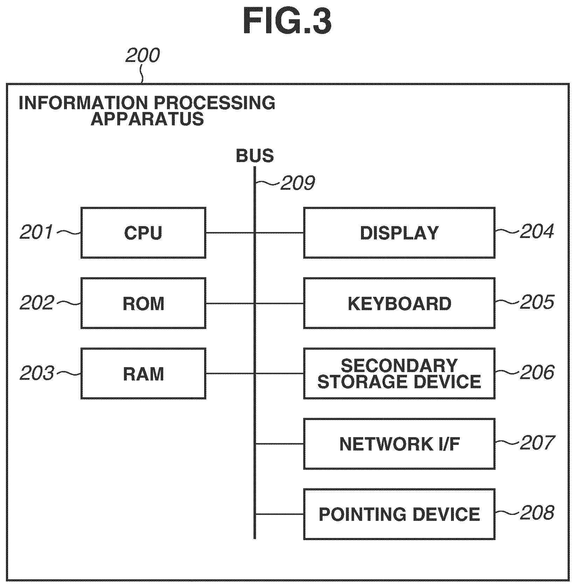

Fig. 3 is a diagram illustrating an example of a hardware configuration of an information processing apparatus 200 functioning as the terminal 101, the transfer apparatus 102, or each management apparatus. The information processing apparatus 200 includes a central processing unit (CPU) 201, a read-only memory (ROM) 202, a random access memory (RAM) 203, a display 204, a keyboard 205, a secondary storage device 206, a network interface (I/F) 207, and a pointing device 208, and these components are connected to each other via a bus 209.

The CPU 201 is an arithmetic processing unit that controls the components connected to each other via the bus 209, by executing programs stored in the ROM 202 and the secondary storage device 206. The ROM 202 is a read-only memory storing an operating system (OS). The RAM 203 is a memory temporarily storing data to be used when the CPU 201 executes calculation processing. The display 204 is a display device that displays a user interface (UI) screen. The keyboard 205 and the pointing device 208 are input devices for a user to perform various input operations. The secondary storage device 206 stores various programs, setting value data, and a database (DB). The network I/F 207 is an interface for connecting to a network, such as a LAN, an intranet, or the internet.

### <Hardware Configuration of Imaging Apparatus 103>

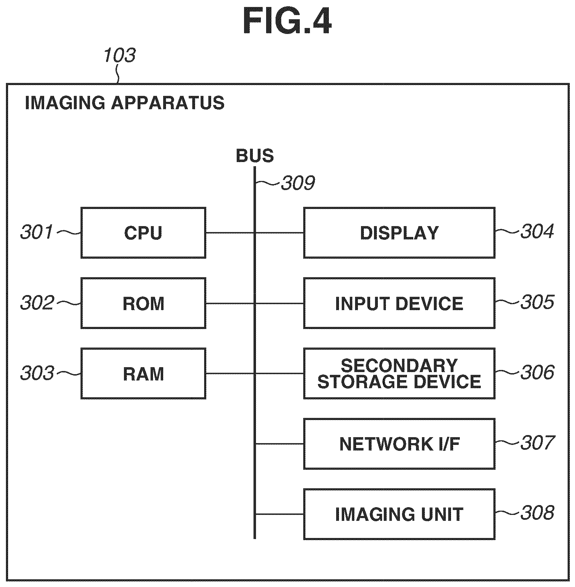

Fig. 4 is a diagram illustrating an example of a hardware configuration of the imaging apparatus 103. The imaging apparatus 103 includes a CPU 301, a ROM 302, a RAM 303, a display 304, an input device 305, a secondary storage device 306, a network I/F 307, and an imaging unit 308, and these components are connected to each other via a bus 309.

The CPU 301 is an arithmetic processing unit that controls the components connected via the bus 309, by executing programs stored in the ROM 302 and the secondary storage device 306. The ROM 302 is a read-only memory storing an OS. The RAM 303 is a memory temporarily storing data to be used when the CPU 301 executes calculation processing. The display 304 is a display device that displays information to be used by the user, such as captured images and various UI screens. The input device 305 is an input device that includes a button, a touch panel, and a microphone, and receives various user operations, such as an image capturing instruction and various setting instructions. The secondary storage device 306 stores various programs, captured image data, and setting values of image capturing settings included in additional information. The image capturing settings include ISO sensitivity, a shutter speed, exposure compensation, and an f-number.

The network I/F 307 is an interface for connecting to a network, such as a LAN, an intranet, or the internet. The imaging unit 308 is a module that converts light received by an image sensor, such as a charge-coupled device (CCD) image sensor or a complementary metal-oxide semiconductor (CMOS) image sensor, into an electrical signal, and records the electrical signal as an image.

### <Logical Configuration of Transfer System 100>

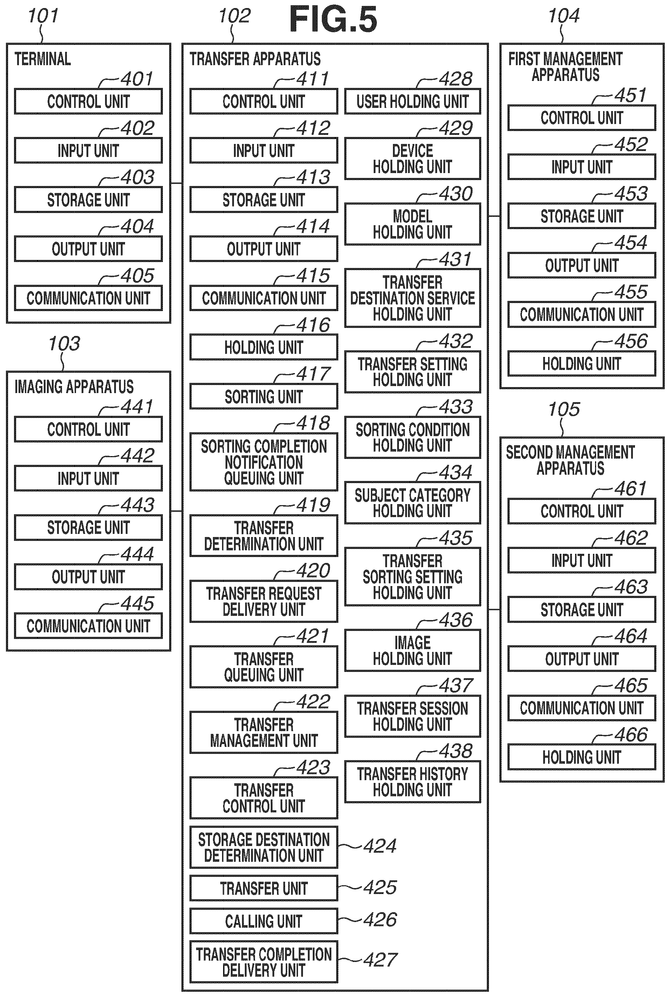

Next, a logical configuration of the transfer system 100 according to the present embodiment will be described with reference to Fig. 5. The terminal is a general PC, a smartphone, or a tablet.

### <Logical Configuration of Terminal 101>

The terminal 101 is implemented by the CPU 201 loading programs stored in the ROM 202, onto the RAM 203, and executing processing in accordance with sequence diagrams to be described below. Then, an execution result of each piece of processing is stored in the RAM 203.

The terminal 101 includes a control unit 401, an input unit 402, a storage unit 403, an output unit 404, and a communication unit 405. Each functional unit will be described.

The control unit 401 controls each component of the terminal 101.

The input unit 402 receives an input from the user.

The storage unit 403 stores therein programs for communicating with the transfer apparatus 102 and an input from the user.

The output unit 404 displays or outputs an input screen of programs for communicating with the transfer apparatus 102, a transmission result, and images on the transfer apparatus 102.

The communication unit 405 performs communication with the transfer apparatus 102 via programs for communicating with the transfer apparatus 102. The communication unit 405 performs communication to perform user registration and camera registration into the transfer apparatus 102, to transfer setting with a transfer destination service, and sorting condition setting.

### <Logical Configuration of Transfer Apparatus 102>

The transfer apparatus 102 is implemented by the CPU 201 loading programs stored in the ROM 202, onto the RAM 203, and executing processing in accordance with sequence diagrams to be described below. Then, an execution result of each piece of processing is stored in the RAM 203.

The transfer apparatus 102 includes a control unit 411, an input unit 412, a storage unit 413, an output unit 414, a communication unit 415, a holding unit 416, a sorting unit 417, a sorting completion notification queuing unit 418, and a transfer determination unit 419. The transfer apparatus 102 further includes a transfer request delivery unit 420, a transfer queuing unit 421, a transfer management unit 422, a transfer control unit 423, a storage destination determination unit 424, a transfer unit 425, a calling unit 426, a transfer completion delivery unit 427, and a user holding unit 428. The transfer apparatus 102 also includes a device holding unit 429, a model holding unit 430, a transfer destination service holding unit 431, a transfer setting holding unit 432, a sorting condition holding unit 433, and a subject category holding unit 434. In addition, the transfer apparatus 102 also includes a transfer sorting setting holding unit 435, an image holding unit 436, a transfer session holding unit 437, and a transfer history holding unit 438. In other embodiments, the transfer apparatus may comprise one or more of the units (means) reference herein, for example an embodiment may include a control unit, a transfer setting holding unit, a transfer sorting setting holding unit, a storage destination determination means, and a transfer unit. Hereinafter, each functional unit will be described.

The control unit 411 controls each component of the transfer apparatus 102.

The input unit 412 that receives an input from the user.

The storage unit 413 stores therein programs operating in the transfer apparatus 102, and inputs from the terminal 101 and the imaging apparatus 103.

The output unit 414 outputs a processing result obtained in the transfer apparatus 102.

The communication unit 415 performs communication with the terminal 101, the imaging apparatus 103, the first management apparatus 104, the second management apparatus 105, the third management apparatus 110, the fourth management apparatus 111, and the fifth management apparatus 112.

The holding unit 416 holds images received from the imaging apparatus 103, and various tables not held in holding units from the user holding unit 428 to the transfer history holding unit 438.

The sorting unit 417 analyzes a received image and associates a generated sorting result with the image.

The sorting completion notification queuing unit 418 receives a message of a sorting completion notification from the sorting unit 417 and holds the sorting completion notification in a queue.

The transfer determination unit 419 acquires a message from the sorting completion notification queuing unit 418 and determines a transfer destination management apparatus to which an image is to be transferred, based on a transfer setting.

The transfer request delivery unit 420 delivers a transfer request based on a transfer instruction from the transfer determination unit 419.

The transfer queuing unit 421 receives a message of a transfer request from the transfer request delivery unit 420 and holds the transfer request in a queue.

The transfer management unit 422 acquires a message from the transfer queuing unit 421 and transfers an image to a predetermined transfer destination folder.

The transfer control unit 423 controls transfer processing in accordance with a transfer destination management apparatus.

The storage destination determination unit 424 determines a storage destination into which an image is to be stored, based on a transfer setting and a transfer sorting setting in accordance with a transfer destination management apparatus.

The transfer unit 425 transfers an image to a storage destination in accordance with a transfer destination management apparatus.

The calling unit 426 calls out various functions that are provided by a management apparatus.

The transfer completion delivery unit 427 delivers a message indicating that image transfer has been completed, to a subsequent processing block.

The user holding unit 428 is holds information regarding the user who uses the transfer apparatus 102.

The device holding unit 429 holds information regarding a camera registered by the user 106 into the transfer apparatus 102.

The model holding unit 430 holds a camera model name corresponding to a camera.

The transfer destination service holding unit 431 holds information regarding each management apparatus.

The transfer setting holding unit 432 holds a transfer setting that associates the user of the transfer apparatus 102, a management apparatus to which an image is to be transferred, and a storage destination into which an image is to be stored.

The sorting condition holding unit 433 that holds a sorting condition based on which images are sorted in accordance with a predetermined rule.

The subject category holding unit 434 holds subject category information that associates a subject category of a subject appearing in an image, and a its name.

The transfer sorting setting holding unit 435 holds a transfer sorting setting that associates a sorting condition, a management apparatus to which an image is to be transferred, and a storage destination into which an image is to be stored.

The image holding unit 436 holds images received from the imaging apparatus 103. When holding is executed, the image holding unit 436 issues an event by using the execution of holding as a trigger. A processing block with a setting of receiving the issuance of an event is able to receive a notification of an event in a case where an event is issued.

The transfer session holding unit 437 holds authentication information with a management apparatus for each user or each management apparatus.

The transfer history holding unit 438 holds a transfer history of transferred images for each image, for each transfer destination management apparatus, or for each user.

### <Logical Configuration of Imaging Apparatus 103>

The imaging apparatus 103 is implemented by the CPU 301 loading programs stored in the ROM 302, onto the RAM 303, and executing processing in accordance with sequence diagrams to be described below. Then, an execution result of each piece of processing is stored in the RAM 303.

The imaging apparatus 103 includes a control unit 441, an input unit 442, a storage unit 443, an output unit 444, and a communication unit 445. Hereinafter, each functional unit will be described.

The control unit 441 controls each component of the imaging apparatus 103.

The input unit 442 receives an input from the user.

The storage unit 443 stores therein programs for communicating with the transfer apparatus 102, and an input from the user.

The output unit 444 displays or outputs an input screen of programs for communicating with the transfer apparatus 102, a transmission result, and captured images.

The communication unit 445 performs communication with the transfer apparatus 102 via programs for communicating with the transfer apparatus 102.

### <Logical Configuration of First Management Apparatus 104>

The first management apparatus 104 is implemented by the CPU 201 loading programs stored in the ROM 202, onto the RAM 203, and executing processing in accordance with sequence diagrams to be described below. Then, an execution result of each piece of processing is stored in the RAM 203.

The first management apparatus 104 includes a control unit 451, an input unit 452, a storage unit 453, an output unit 454, a communication unit 455, and a holding unit 456. Hereinafter, each functional unit will be described.

The control unit 451 is a control unit that controls each component of the imaging apparatus 103.

The input unit 452 receives an input from an administrator of the first management apparatus 104.

The storage unit 453 stores therein programs for communicating with the transfer apparatus 102, and an input from the administrator.

The output unit 454 displays or outputs an input screen of programs for communicating with the transfer apparatus 102, a transmission result, and images held by the holding unit 456.

The communication unit 455 communicates with terminals of users of the transfer apparatus 102 and the first management apparatus 104.

The holding unit 456 holds images received from the user terminal of the transfer apparatus 102 and the first management apparatus 104.

Each of the functional units included in the terminal 101, the transfer apparatus 102, the imaging apparatus 103, the first management apparatus 104, the second management apparatus 105, the third management apparatus 110, the fourth management apparatus 111, and the fifth management apparatus 112 may be implemented by a plurality of terminals or information processing apparatuses in a dispersed manner.

Each functional unit has a data editing function. In a case where each function is implemented by a plurality of information processing apparatuses in a dispersed manner, the plurality of information processing apparatuses are connected via a LAN in such a manner that communication is able to be performed with each other, and perform a series of processes to be described below in cooperation.

### <Sequence of Transfer System 100>

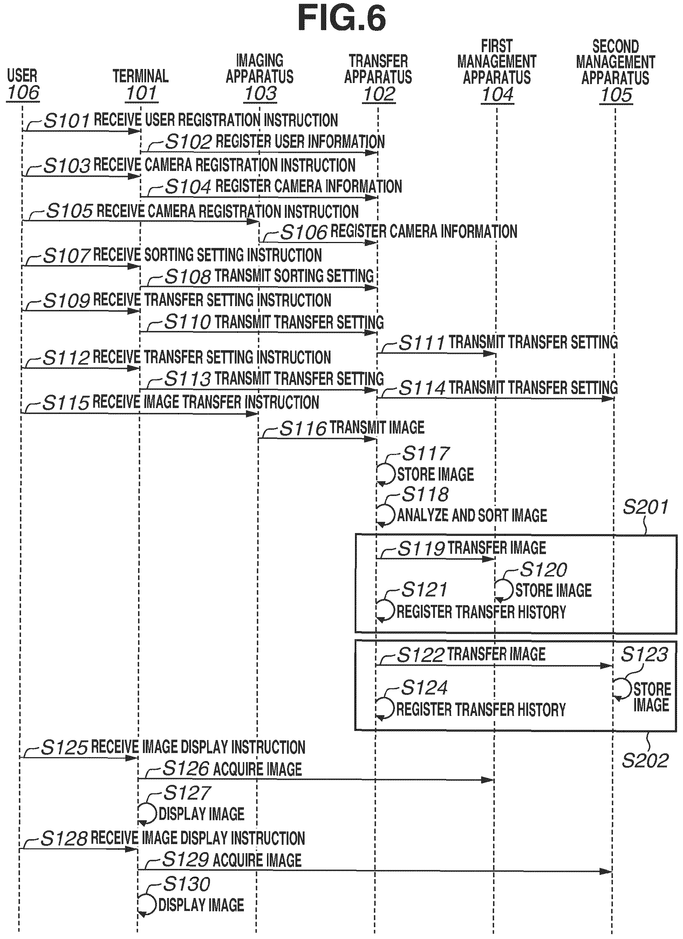

Next, a procedure of processing that is executed in the transfer system 100 will be described with reference to a sequence diagram illustrated in Fig. 6.

In step S101, the terminal 101 receives a user registration instruction from the user 106.

In step S102, the terminal 101 transmits entered user information to the transfer apparatus 102. The transfer apparatus 102 registers the received user information into a user table 501.

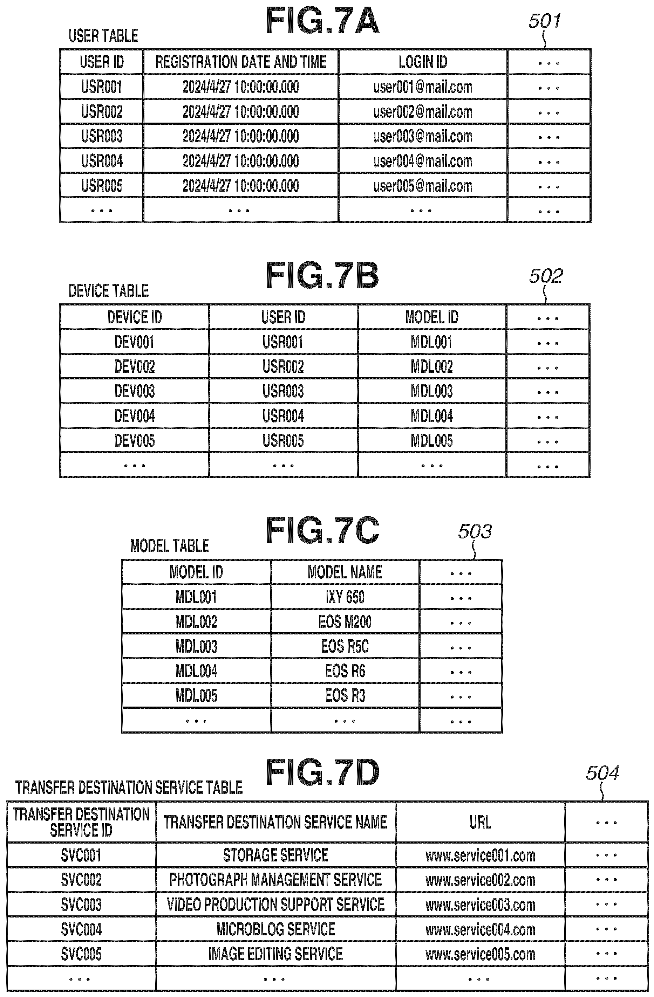

The details of the user table 501 will be described below with reference to Fig. 7A.

In step S103, the terminal 101 receives a camera registration instruction from the user 106.

In step S104, the terminal 101 transmits entered camera information to the transfer apparatus 102.

In step S105, the imaging apparatus 103 receives the camera registration instruction from the user 106.

In step S106, the imaging apparatus 103 transmits the camera registration instruction to the transfer apparatus 102. The transfer apparatus 102 registers the camera information into a device table 502 based on the received camera registration instruction. The details of the device table 502 will be described below with reference to Fig. 7B.

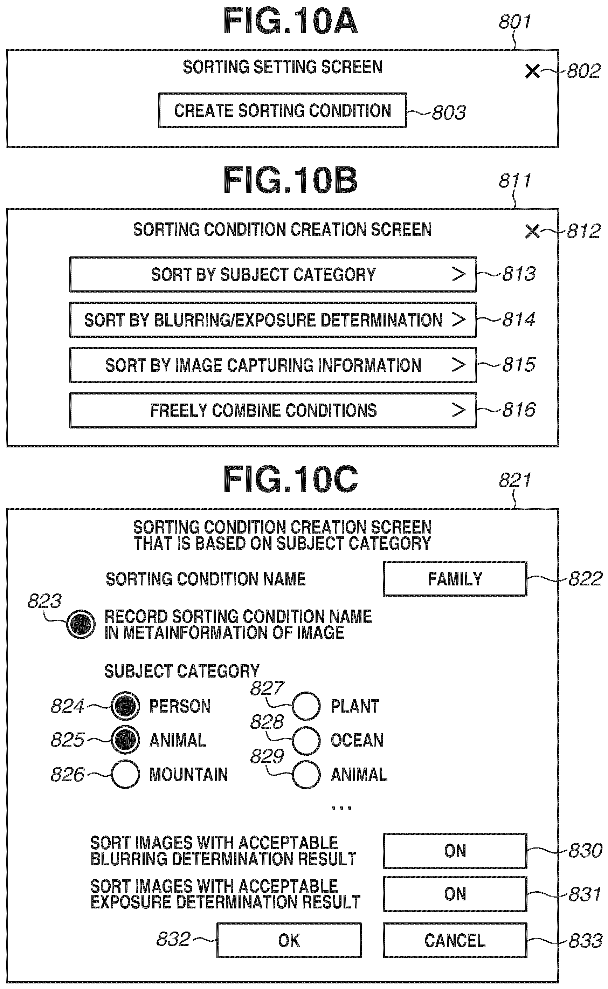

In step S107, the terminal 101 receives a sorting setting instruction from the user 106. The terminal 101 receives the sorting setting instruction from the user 106 via a series of screens related to a sorting setting that are illustrated in Figs. 10A to 10C. The details of a sorting setting screen and other screens will be described below with reference to Figs. 10A to 10C.

In step S108, the terminal 101 transmits a sorting setting to the transfer apparatus 102.

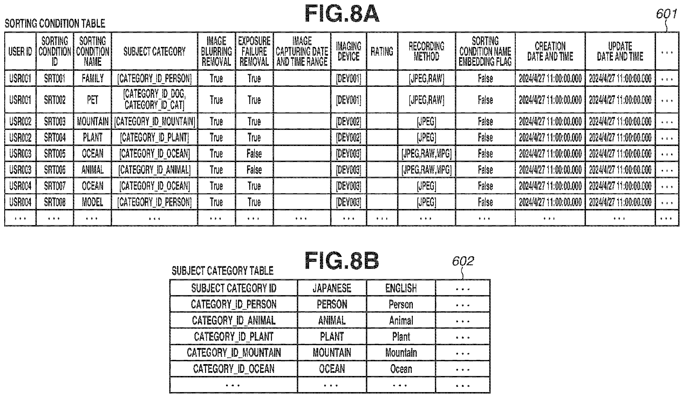

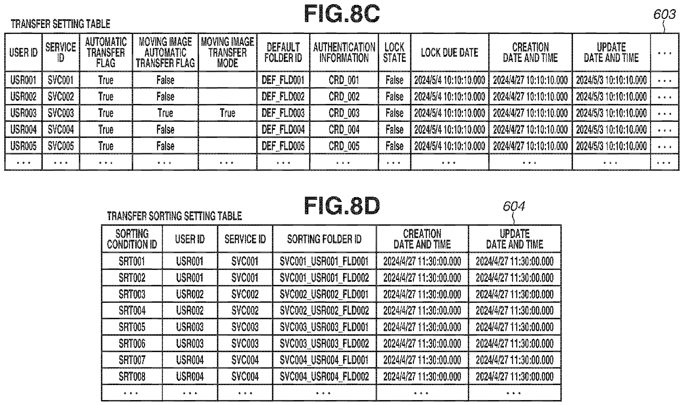

The transfer apparatus 102 registers the received sorting setting into a sorting condition table 601. The details of the sorting condition table 601 will be described below with reference to Figs. 8A and 8B.

In step S109, the terminal 101 receives a transfer setting instruction to the first management apparatus 104 from the user 106.

In step S110, the terminal 101 transmits a transfer setting for the first management apparatus 104 to the transfer apparatus 102.

In step S111, the transfer apparatus 102 transmits the transfer setting to the first management apparatus 104. The first management apparatus 104 performs authentication of the user based on the transfer setting, and transmits an authentication result to the transfer apparatus 102. In a case where the authentication has succeeded, the transfer apparatus 102 registers the transfer setting into a transfer setting table 603. The details of the transfer setting table 603 will be described below with reference to Fig. 8C.

In step S112, the terminal 101 receives a transfer setting instruction to the second management apparatus 105 from the user 106.

In step S113, the terminal 101 transmits a transfer setting for the second management apparatus 105 to the transfer apparatus 102.

In step S114, the transfer apparatus 102 transmits the transfer setting to the second management apparatus 105. The second management apparatus 105 performs authentication of the user based on the transfer setting, and transmits an authentication result to the transfer apparatus 102. In a case where the authentication has succeeded, the transfer apparatus 102 registers the transfer setting into the transfer setting table 603.

In step S115, the imaging apparatus 103 receives an image transfer instruction from the user 106.

In step S116, the imaging apparatus 103 transmits an image to the transfer apparatus 102.

In step S117, the transfer apparatus 102 stores the received image into the image holding unit 436.

In step S118, the transfer apparatus 102 analyzes the stored image and associates an analysis result with the image.

In step S119, the transfer apparatus 102 transfers the image to the first management apparatus 104.

In step S120, the first management apparatus 104 stores the received image.

In step S121, the transfer apparatus 102 registers a transfer history of the image transferred to the first management apparatus 104, into a transfer history table 703.

In step S122, the transfer apparatus 102 transfers the image to the second management apparatus 105.

In step S123, the second management apparatus 105 stores the received image.

In step S124, the transfer apparatus 102 registers a transfer history of the image transferred to the second management apparatus 105, into the transfer history table 703.

In step S125, the terminal 101 receives an image display instruction of an image that is managed by the first management apparatus 104, from the user 106.

In step S126, the terminal 101 acquires the image from the first management apparatus 104.

In step S127, the terminal 101 displays the acquired image on the output unit 404.

In step S128, the terminal 101 receives an image display instruction of an image that is managed by the second management apparatus 105, from the user 106.

In step S129, the terminal 101 acquires the image from the second management apparatus 105.

In step S130, the terminal 101 displays the acquired image on the output unit 404.

### <Configuration of Table>

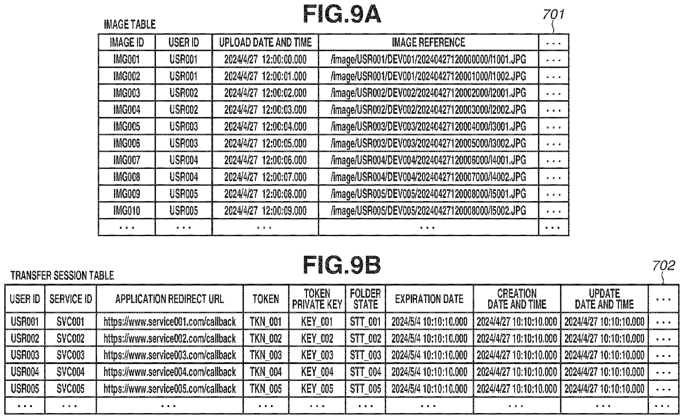

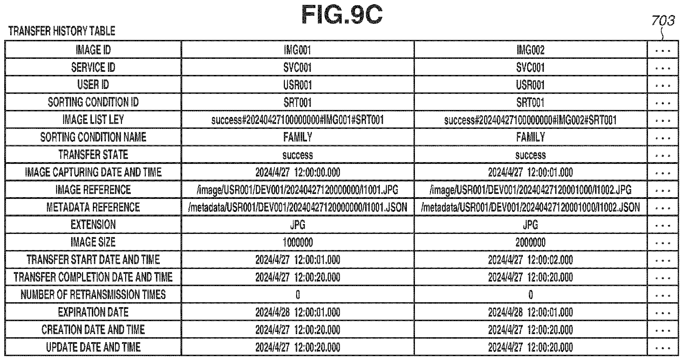

Next, tables that are managed by the transfer apparatus 102 according to the present embodiment will be described with reference to Figs. 7A to 7D to Figs. 9A to 9C.

The user table 501 is a user table that is managed by the user holding unit 428.

By storing a registration date and time and a login ID with being associated with a user identifier (ID) for uniquely identifying a user, registration date and time and a login ID are able to be referred to using a user ID as a key.

The device table 502 is a device table that is managed by the device holding unit 429.

By storing a user ID and a model ID with being associated with a device ID for uniquely identifying a device, a user ID, a model ID, and others are able to be referred to using a device ID as a key.

A model table 503 is a model table that is managed by the model holding unit 430.

By storing a model name with being associated with a model ID for uniquely identifying a model, a model name and others are able to be referred to using a model ID as a key.

A transfer destination service table 504 is a transfer destination service table that is managed by the transfer destination service holding unit 431.

By storing a transfer destination service name and a uniform resource locator (URL) with being associated with a transfer destination service ID for uniquely identifying a transfer destination service, a transfer destination service name, a URL, and others are able to be referred to using a transfer destination service ID as a key.

The sorting condition table 601 is a sorting condition table that is managed by the sorting condition holding unit 433.

A sorting condition ID, a sorting condition name, a subject category, image blurring removal, exposure failure removal, an image capturing date and time range, an imaging device, rating, a recording method, a sorting condition name embedding flag, creation date and time, and update date and time are stored with being associated with a user ID for uniquely identifying a user. Consequently, a sorting condition ID, a sorting condition name, a subject category, image blurring removal, exposure failure removal, an image capturing date and time range, an imaging device, rating, a recording method, a sorting condition name embedding flag, creation date and time, update date and time, and others are able to be referred to using a user ID as a key.

A subject category table 602 is a subject category table that is managed by the holding unit 416.

By storing a subject category name in the language of each country and each region with being associated with a subject category ID for uniquely identifying a subject category, a subject category name in the language of each country and each region is able to be referred to using a subject category ID as a key.

The transfer setting table 603 is a transfer setting table that is managed by the transfer setting holding unit 432.

A user ID is an ID for uniquely identifying a user. A service ID, an automatic transfer flag, a moving image automatic transfer flag, a moving image transfer mode, a default folder ID, authentication information, a lock state, a lock due date, creation date and time, and update date and time are stored with being associated with a user ID. Consequently, a service ID, an automatic transfer flag, a moving image automatic transfer flag, a moving image transfer mode, a default folder ID, authentication information, a lock state, a lock due date, creation date and time, update date and time, and others are able to be referred to using a user ID as a key. In the present embodiment, the transfer setting table 603 includes a service ID, but information included in the transfer setting table 603 is not limited to this, and any information may be included as long as the information is to be used to uniquely identify a management apparatus, such as an endpoint of the management apparatus. That is, the transfer setting table 603 holds a storage destination identifier set when a storage destination has been used in the past, with being associated with user information and transfer destination information. Thus, in a case where a setting of not performing sorting is set, the storage destination determination unit 424 may acquire the storage destination identifier from the transfer setting table 603, and set a storage destination corresponding to the acquired storage destination identifier, as an image storage destination.

A transfer sorting setting table 604 is a transfer sorting setting table that is managed by the transfer sorting setting holding unit 435.

A user ID, a service ID, a sorting folder ID, creation date and time, and update date and time are stored with being associated with a sorting condition ID for uniquely identifying a sorting condition. Consequently, a user ID, a service ID, a sorting folder ID, creation date and time, update date and time, and others are able to be referred to using a sorting condition ID as a key.

An image table 701 is an image table that is managed by the image holding unit 436.

By storing a user ID, upload date and time, and an image reference with being associated with an image ID for uniquely identifying an image, a user ID, upload date and time, an image reference, and others are able to be referred to using an image ID as a key.

A transfer session table 702 is a transfer session table that is managed by the transfer session holding unit 437.

A service ID, an application redirect URL, a token, a token private key, a folder state, an expiration date, creation date and time, and update date and time are stored with being associated with a user ID for uniquely identifying a user. Consequently, a service ID, an application redirect URL, a token, a token private key, a folder state, an expiration date, creation date and time, update date and time, and others are able to be referred to using a user ID as a key.

The transfer history table 703 is a transfer history table that is managed by the transfer history holding unit 438.

An image ID is an ID for uniquely identifying an image. A service ID, a user ID, a sorting condition ID, an image list key, a sorting condition name, a transfer state, image capturing date and time, an image reference, a metadata reference, an extension, and an image size are stored with being associated with an image ID. In addition, transfer start date and time, transfer completion date and time, the number of retransmission times, an expiration date, creation date and time, and update date and time are also stored with being associated with an image ID. Consequently, a service ID, a user ID, a sorting condition ID, an image list key, a sorting condition name, a transfer state, image capturing date and time, an image reference, a metadata reference, an extension, and an image size are able to be referred to using an image ID as a key. In addition, transfer start date and time, transfer completion date and time, the number of retransmission times, an expiration date, creation date and time, and update date and time are able to be referred to.

### <Configuration of Ul>

Next, the sorting setting screen generated by the transfer apparatus 102 according to the present embodiment will be described with reference to Fig. 10A.

A sorting setting screen 801 is configured for receiving a sorting setting instruction from the user 106.

A close button 802 may be provided and configured for receiving a sorting setting stop instruction from the user 106.

A sorting condition creation button 803 is for receiving a display instruction of a sorting condition creation screen 811 from the user 106.

Next, a sorting condition creation screen generated by the transfer apparatus 102 according to the present embodiment will be described with reference to Fig. 10B.

The sorting condition creation screen 811 is a sorting condition creation screen for receiving a sorting condition creation instruction from the user 106.

A close button 812 may be provided and configured for receiving a sorting condition creation stop instruction from the user 106, preferably for receiving an instruction to not proceed.

A sorting condition creation screen display button 813 may be a subject category-based sorting condition creation screen display button for displaying a subject category-based sorting condition creation screen 821.

A blurring/exposure determination-based sorting condition creation screen display button 814 may be provided and configured for displaying a blurring/exposure determination-based sorting condition creation screen (not illustrated).

An image capturing information-based sorting condition creation screen display button 815 may be provided and configured for displaying an image capturing information-based sorting condition creation screen (not illustrated).

A free combination-based sorting condition creation screen display button 816 may be provided and configured for displaying a free combination-based sorting condition creation screen (not illustrated).

Next, a subject category-based sorting condition creation screen generated by the transfer apparatus 102 according to the present embodiment will be described with reference to Fig. 10C.

The subject category-based sorting condition creation screen 821 may be provided and configured for receiving a subject category-based sorting condition creation instruction.

A sorting condition name input box 822 may be provided and configured for receiving an input of a sorting condition name.

A sorting condition name recording selection button 823 may be provided and configured for receiving a selection performed by the user 106 as to whether to record a sorting condition name in metainformation of an image.

A person sorting selection button 824 may be provided and configured f or receiving a selection by the user 106 as to whether images including "persons" are sorted. In other embodiments, the person sorting selection button may be another user selectable graphical element, such as a checkbox or similar.

An animal sorting selection button 825 may be provided and configured for receiving a selection by the user 106 as to whether images including "animals" are sorted is received. In other embodiments, the animal sorting selection button may be another user selectable graphical element, such as a checkbox or similar.

A mountain sorting selection button 826 may be provided for receiving a selection that is performed by the user 106 as to whether images including "mountains" are sorted. In other embodiments, the mountain sorting selection button may be another user selectable graphical element, such as a checkbox or similar.

A plant sorting selection button 827 may be provided and configured for receiving a selection that is performed by the user 106 as to whether images including "plants" are sorted. In other embodiments, the plant sorting selection button may be another user selectable graphical element, such as a checkbox or similar.

An ocean sorting selection button 828 may be provided and configured for receiving a selection that is performed by the user 106 as to whether images including "oceans" are sorted. In other embodiments, the ocean sorting selection button may be another user selectable graphical element, such as a checkbox or similar.

An animal sorting selection button 829 may be provided and configured for receiving a selection that is performed by the user 106 as to whether images including "animals" are sorted. In other embodiments, the animal sorting selection button may be another user selectable graphical element, such as a checkbox or similar. In the current embodiment the subject categories have been referred to as 'person', 'animal', 'mountain', 'plant', and 'ocean', however, these are only examples and in other embodiments other subject categories may be provided. That is to say, that there be one or more subject category selection buttons (or user selectable graphical element) provided, preferably a subject category selection button (or user selectable graphical element) for each subject category.

A blurring sorting selection button 830 may be provided and configured for receiving a selection that is performed by the user 106 as to whether images in which subjects are not blurred are sorted.

An exposure sorting selection button 831 may be provided and configured for receiving a selection that is performed by the user 106 as to whether images with appropriate exposure are sorted.

An OK button 832 may be provided and configured for fixing and receiving a selection by the user 106 on the subject category-based sorting condition creation screen 821.

A cancel button 833 may be provided and configured for receiving a stop instruction of subject category-based sorting condition creation from the user 106.

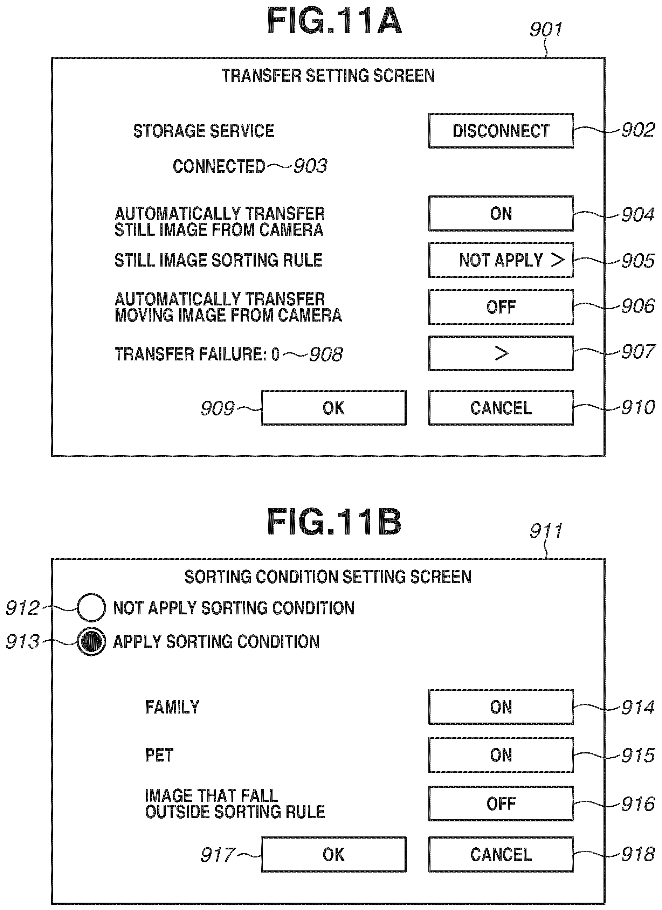

Next, a sorting setting screen generated by the transfer apparatus 102 according to the present embodiment will be described with reference to Fig. 11A.

A transfer setting screen 901 may be configured for receiving a transfer setting instruction from the user 106.

A connection setting button 902 may be provided for acquiring authentication to transfer an image to a management apparatus. A message corresponding to a connection state is displayed in a label of the button. In a case where connection has been established, "disconnect" is displayed, and in a case where connection is not established, "connect" is displayed.

A connection state display label 903 may be provided and configured for displaying a state of connection with the management apparatus. In a case where connection has been established, "connected" is displayed, and in a case where connection is not established, "unconnected" is displayed.

A still image automatic transfer setting button 904 may be provided and configured for receiving an instruction from the user 106 as to whether to automatically transfer a still image to a connected management apparatus when the transfer apparatus 102 receives a still image.

A sorting condition setting screen calling button 905 may be provided and configured for calling out a sorting condition setting screen 911 for receiving an instruction from the user 106 as to whether to apply a sorting condition when a still image is transferred to a management apparatus.

A moving image automatic transfer setting button 906 may be provided and configured for receiving an instruction from the user 106 as to whether to automatically transfer a moving image to a connected management apparatus when the transfer apparatus 102 receives a moving image.

A retransmission setting button 907 may be provided and configured for receiving an instruction from the user 106 as to whether to retransmit an image failed to be transferred to a management apparatus.

A transfer failure number display label 908 may be provided and configured for displaying the number of images failed to be transferred to a management apparatus.

An OK button 909 may be provided and configured for fixing and receiving a selection by the user 106 on the transfer setting screen 901.

A cancel button 910 may be provided and configured for receiving a transfer setting stop instruction from the user 106.

Next, a sorting condition setting screen that is generated by the transfer apparatus 102 according to the present embodiment will be described with reference to Fig. 11B.

The sorting condition setting screen 911 is configured for receiving an instruction from the user 106 as to whether to apply a sorting condition when a still image is transferred to a management apparatus.

A sorting condition disapply button 912 may be provided and configured for receiving a selection indicating that a sorting condition is not to be applied, from the user 106.

A sorting condition apply button 913 may be provided and for receiving a selection indicating that a sorting condition is to be applied, from the user 106.

A first sorting condition apply button 914 may be provided and configured for receiving a selection indicating that a first sorting condition is to be applied, from the user 106.

A second sorting condition apply button 915 may be provided and configured for receiving a selection indicating that a second sorting condition is to be applied, from the user 106.

An out-of-sorting condition image sorting apply button 916 may be provided and configured for receiving a selection that is performed by the user 106 as to whether images not satisfying a set sorting condition are to be sorted.

An OK button 917 may be provided and configured for fixing and receiving a selection that is performed by the user 106 on the sorting condition setting screen 911. In response to receipt of pressing performed on the OK button 917, the control unit 411 may register the set settings into the transfer sorting setting table 604.

A cancel button 918 may be provided and configured for receiving a sorting condition setting stop instruction from the user 106.

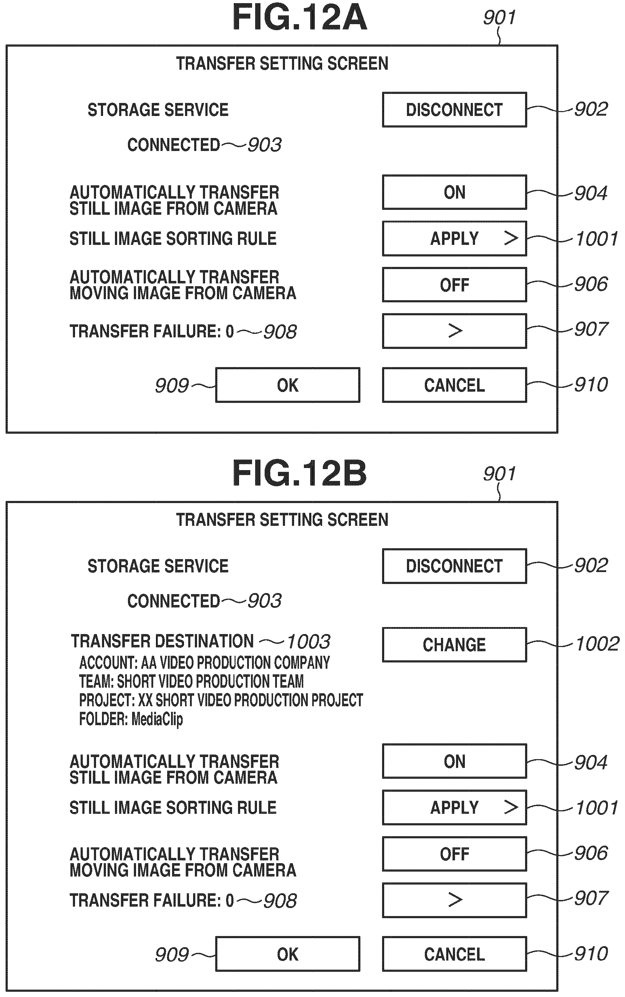

Next, the transfer setting screen 901 that is displayed in a case where application of a sorting condition is set to be enabled will be described with reference to Fig. 12A.

A sorting condition setting screen calling button 1001 may be displayed in a case where the application of a sorting condition is set to be enabled. In a case where the sorting condition apply button 913 is set to be enabled on the sorting condition setting screen 911, a label on the sorting condition setting screen calling button 1001 is updated to "apply".

Next, a transfer setting screen related to the third management apparatus 110 that is generated by the transfer apparatus 102 according to the present embodiment will be described with reference to Fig. 12B.

A transfer destination account setting screen calling button 1002 may be provided and configured for calling out a transfer destination account setting screen 1101 for setting of an account in the third management apparatus 110 serving as a transfer destination when an image is transferred to the third management apparatus 110. In response to the control unit 401 receiving the pressing performed on the transfer destination account setting screen calling button 1002 via the input unit 402, the control unit 401 displays the transfer destination account setting screen 1101 on the output unit 404.

A transfer destination display field 1003 may be provided and configured for displaying information regarding a transfer destination in the third management apparatus 110 that is set by the user 106. An account name of an account, a team name of a team, a project name of a project, and a folder name of a folder in the third management apparatus 110 that have been set by the user 106 are displayed.

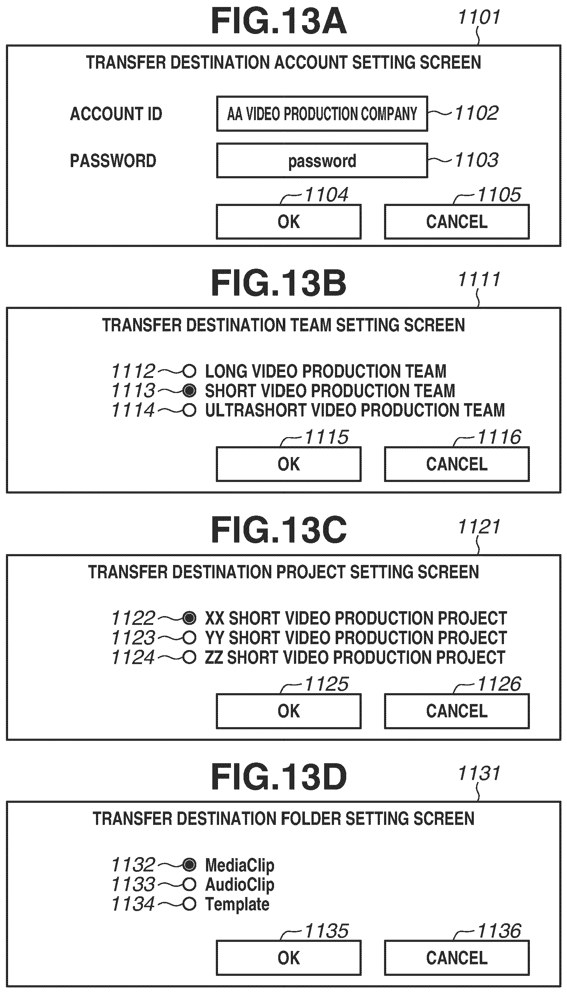

Next, the transfer destination account setting screen 1101 that is generated by the transfer apparatus 102 according to the present embodiment will be described with reference to Fig. 13A.

The transfer destination account setting screen 1101 may be provided and configured for setting an account in the third management apparatus 110 serving as a transfer destination when an image is transferred to the third management apparatus 110.

An account ID input box 1102 may be provided and may be an input box into which an ID of an account in the third management apparatus 110 is entered.

A password input box 1103 may be provided and may be an input box into which a password of an account in the third management apparatus 110 is entered.

An OK button 1104 may be provided and configured for fixing and receiving an input that is performed by the user 106 on the transfer destination account setting screen 1101. In response to pressing performed on the OK button 1104, a transfer destination team setting screen 1111 is called out.

A cancel button 1105 may be provided and configured for receiving a stop instruction of the transfer destination account setting from the user 106. In response to pressing performed on the cancel button 1105, the transfer setting screen 901 related to the third management apparatus 110 is called out.

Next, the transfer destination team setting screen 1111 that is generated by the transfer apparatus 102 according to the present embodiment will be described with reference to Fig. 13B.

The transfer destination team setting screen 1111 is for setting a team belonging to an account set in the account ID input box 1102.

A first team selection button 1112 may be provided and configured for selecting a first team belonging to an account set in the account ID input box 1102.

A second team selection button 1113 may be provided and configured for selecting a second team belonging to an account set in the account ID input box 1102.

A third team selection button 1114 may be provided and configured for selecting a third team belonging to an account set in the account ID input box 1102.

An OK button 1115 may be provided and configured for fixing and receiving an input that is performed by the user 106 on the transfer destination team setting screen 1111. In response to pressing performed on the OK button 1115, a transfer destination project setting screen 1121 is called out.

A cancel button 1116 may be provided and configured for receiving a stop instruction of the transfer destination team setting from the user 106. In response to pressing performed on the cancel button 1116, the transfer destination account setting screen 1101 is called out.

Next, the transfer destination project setting screen 1121 that is generated by the transfer apparatus 102 according to the present embodiment will be described with reference to Fig. 13C.

The transfer destination project setting screen 1121 may be provided and configured for setting a project belonging to a team set on the transfer destination team setting screen 1111.

A first project selection button 1122 may be provided and configured for selecting a first project belonging to a project set on the transfer destination team setting screen 1111.

A second project selection button 1123 may be provided and configured for selecting a second project belonging to a project set on the transfer destination team setting screen 1111.

A third project selection button 1124 may be provided and configured for selecting a third project belonging to a project set on the transfer destination team setting screen 1111.

An OK button 1125 may be provided and configured for fixing and receiving an input that is performed by the user 106 on the transfer destination project setting screen 1121. In response to pressing performed on the OK button 1125, a transfer destination folder setting screen 1131 is called out.

A cancel button 1126 may be provided and configured for receiving a stop instruction of the transfer destination project setting from the user 106. In response to pressing performed on the cancel button 1126, the transfer destination team setting screen 1111 is called out.

Next, the transfer destination folder setting screen 1131 generated by the transfer apparatus 102 according to the present embodiment will be described with reference to Fig. 13D.

The transfer destination folder setting screen 1131 is for setting a folder belonging to a project set on the transfer destination project setting screen 1121.

A first folder selection button 1132 may be provided and configured for selecting a first folder belonging to a project set on the transfer destination project setting screen 1121.

A second folder selection button 1133 may be provided and configured for selecting a second folder belonging to a project set on the transfer destination project setting screen 1121.

A third folder selection button 1134 may be provided and configured for selecting a third folder belonging to a project set on the transfer destination project setting screen 1121.

An OK button 1135 may be provided and configured for fixing and receiving an input that is performed by the user 106 on the transfer destination folder setting screen 1131.

A cancel button 1136 may be provided and configured for receiving a stop instruction of the transfer destination folder setting from the user 106. In response to pressing performed on the cancel button 1136, the transfer destination project setting screen 1121 is called out.

### <Sequence from Sorting Completion to Transfer History Registration in Transfer Apparatus 102>

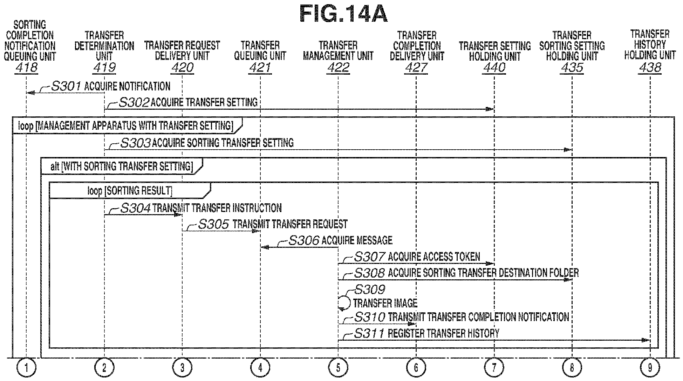

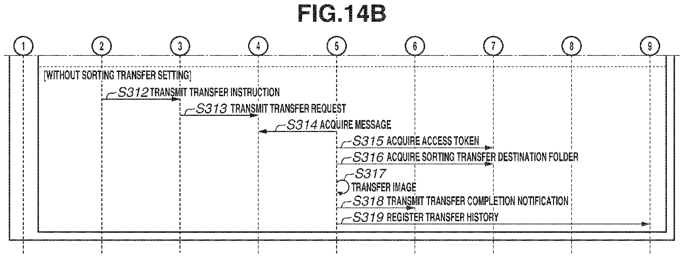

Next, a procedure of processing from sorting completion to transfer history registration in the transfer apparatus 102 will be described with reference to a sequence diagram illustrated in Figs. 14A and 14B.

This is a procedure of processing corresponding to step S201 in Fig. 6.

In step S301, the transfer determination unit 419 acquires a message of a sorting completion notification from the sorting completion notification queuing unit 418.

In step S302, the transfer determination unit 419 acquires a transfer setting of the user from the transfer setting holding unit 432.

In step S303, the transfer determination unit 419 acquires a sorting transfer setting for a management apparatus to which a transfer setting has been set, from the transfer sorting setting holding unit 435.

In step S304, in a case where sorting transfer has been set, the transfer determination unit 419 transmits a transfer instruction to the transfer request delivery unit 420 by the number of types of sorting results.

In step S305, the transfer request delivery unit 420 transmits the transfer request to the transfer queuing unit 421.

In step S306, transfer management unit 422 acquires a message of the transfer request from the transfer queuing unit 421.

In step S307, the transfer management unit 422 acquires an access token corresponding to a transfer destination management apparatus included in the message, from the transfer setting holding unit 432.

In step S308, the transfer management unit 422 acquires a sorting transfer destination folder from the transfer sorting setting holding unit 435.

In step S309, the transfer management unit 422 transfers an image to the acquired sorting transfer destination folder.

In step S310, the transfer management unit 422 transmits a transfer completion notification to the transfer completion delivery unit 427.

In step S311, the transfer management unit 422 registers a transfer history into the transfer history holding unit 438.

In step S312, in a case where sorting transfer is not set, the transfer determination unit 419 transmits a transfer instruction to the transfer request delivery unit 420.

In step S313, the transfer request delivery unit 420 transmits the transfer request to the transfer queuing unit 421.

In step S314, the transfer management unit 422 acquires a message of a transfer request from the transfer queuing unit 421.

In step S315, the transfer management unit 422 acquires an access token corresponding to a transfer destination management apparatus included in the message, from the transfer setting holding unit 432.

In step S316, the transfer management unit 422 acquires a sorting transfer destination folder from the transfer setting holding unit 432.

In step S317, the transfer management unit 422 transfers an image to the acquired sorting transfer destination folder.

In step S318, the transfer management unit 422 transmits a transfer completion notification to the transfer completion delivery unit 427.

In step S319, the transfer management unit 422 registers a transfer history into the transfer history holding unit 438.

### <Sequence Starting from Transfer Management Unit 422 in a Case Where Image Is Transferred to First Management Apparatus 104>

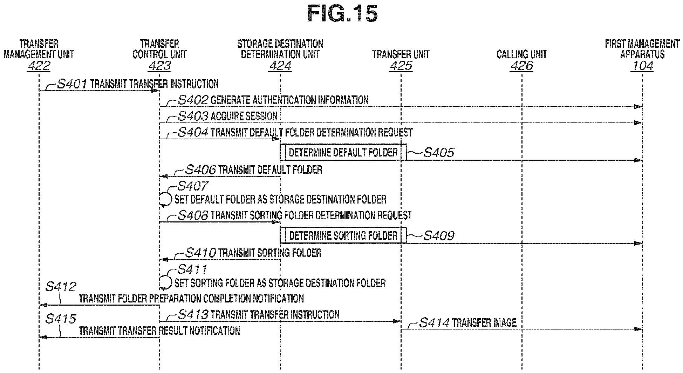

Next, a procedure of processing staring from the transfer management unit 422 in a case of transferring an image to the first management apparatus 104 will be described with reference to a sequence diagram illustrated in Fig. 15.

In step S401, the transfer management unit 422 transmits a transfer instruction to the transfer control unit 423, based on the acquired message.

In step S402, the transfer control unit 423 generates authentication information to perform an operation on the first management apparatus 104.

In step S403, the transfer control unit 423 acquires a session from the first management apparatus 104.

In step S404, the transfer control unit 423 transmits a default folder determination request to the storage destination determination unit 424. A default folder refers to a folder that is created immediately below a storage region allocated by a management apparatus to the user. A folder name is a service name of the transfer apparatus 102. In a case where a transfer destination is the second management apparatus 105 or the fifth management apparatus 112, or in a case where a transfer destination is the fourth management apparatus 111, and in a case where a sorting setting is enabled, a position of a default folder is designated to be immediately below a storage region. That is, a folder with a service name of the transfer apparatus 102 is not created in one hierarchy. Alternatively, in a case where a transfer destination is the third management apparatus 110, a folder name of a default folder may be a folder name set by the user.

In step S405, the storage destination determination unit 424 determines a default folder.

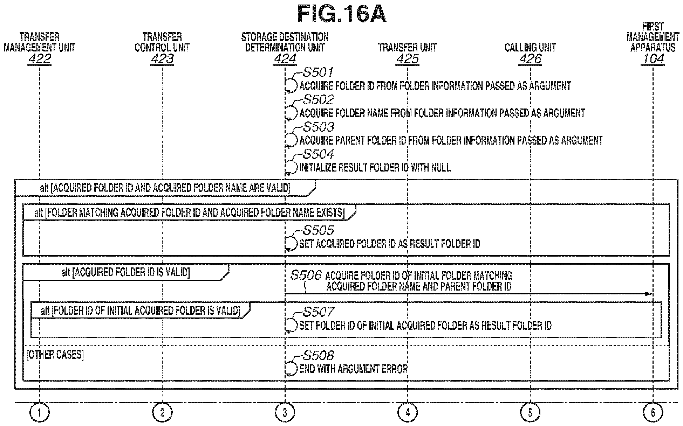

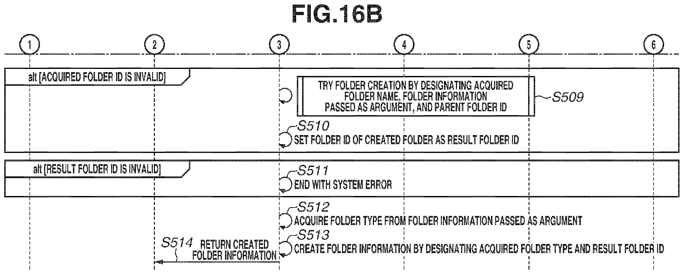

The details of the processing that is executed by the storage destination determination unit 424 in step S405 will be described below with reference to Figs. 16A and 16B to 18.

In step S406, the storage destination determination unit 424 transmits default folder information which is information regarding a default folder, to the transfer control unit 423.

In step S407, the transfer control unit 423 sets the default folder as a storage destination folder.

In step S408, the transfer control unit 423 transmits a sorting folder determination request to the storage destination determination unit 424. A sorting folder refers to a folder that is created immediately below the default folder. A folder name serves as a sorting condition name.

In step S409, the storage destination determination unit 424 determines a sorting folder. The details of the processing to be executed by the storage destination determination unit 424 in step S409 will be described below with reference to Figs. 16A and 16B to 18.

In step S410, the storage destination determination unit 424 transmits sorting folder information which is information regarding a sorting folder, to the transfer control unit 423.

In step S411, the transfer control unit 423 sets the sorting folder as a storage destination folder.

In step S412, the transfer control unit 423 notifies the transfer management unit 422 that folder preparation has been completed.

In step S413, the transfer control unit 423 transmits an image transfer instruction to the transfer unit 425.

In step S414, the transfer unit 425 transfers an image to the first management apparatus 104.

In step S415, the transfer control unit 423 notifies the transfer management unit 422 of a transfer result.

### <Sequence of Storage Destination Determination Unit 424 in Step S405>

Next, a procedure of the processing that is executed by the storage destination determination unit 424 in step S405 will be described with reference to a sequence diagram illustrated in Figs. 16A and 16B.

In step S501, the storage destination determination unit 424 acquires a folder ID from folder information passed as an argument.

In step S502, the storage destination determination unit 424 acquires a folder name from folder information passed as an argument.

In step S503, the storage destination determination unit 424 acquires a parent folder ID from folder information passed as an argument.

In step S504, the storage destination determination unit 424 initializes a result folder ID with null.

In step S505, in a case where the acquired folder ID and the acquired folder name are valid, and in a case where a folder matching the acquired folder ID and the acquired folder name exists, the storage destination determination unit 424 sets the acquired folder ID as a result folder ID.

In step S506, in a case where the acquired folder name is valid, the storage destination determination unit 424 acquires a folder ID of an initial folder matching the acquired folder name and the parent folder ID, from the first management apparatus 104.

In step S507, in a case where the folder ID of the acquired initial folder is valid, the storage destination determination unit 424 sets the folder ID of the acquired initial folder as a result folder ID.

In step S508, in other cases, the storage destination determination unit 424 ends the processing with an argument error.

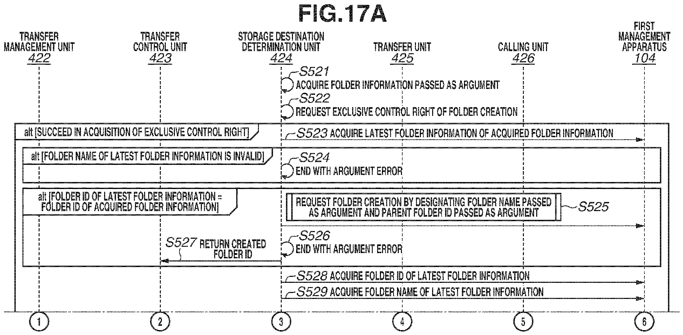

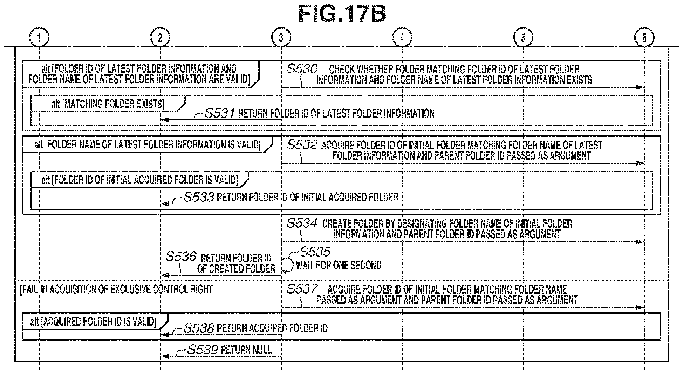

In step S509, in a case where the result folder ID is invalid, the storage destination determination unit 424 tries folder creation by designating the acquired folder name, folder information passed as an argument, and the parent folder ID. The details of the processing in step S509 will be described below with reference to Figs. 17A and 17B. In step S510, the storage destination determination unit 424 sets a folder ID of the created folder as a result folder ID.

In step S511, in a case where the result folder ID is invalid, the storage destination determination unit 424 ends the processing with a system error.

In step S512, the storage destination determination unit 424 acquires a folder type from folder information passed as an argument.

In step S513, the storage destination determination unit 424 creates folder information by designating the acquired folder type and the result folder ID.

In step S514, the storage destination determination unit 424 returns the created folder information to the transfer control unit 423.

### <Sequence of Storage Destination Determination Unit 424 in Step S509>

Next, a procedure of the processing that is executed by the storage destination determination unit 424 in step S509 will be described with reference to a sequence diagram illustrated in Figs. 17A and 17B.

In step S521, the storage destination determination unit 424 acquires folder information passed as an argument.

In step S522, the storage destination determination unit 424 requests exclusive control right of folder creation.

In step S523, in a case where the acquisition of exclusive control right of folder creation has succeeded, the storage destination determination unit 424 acquires latest folder information of the acquired folder information from the first management apparatus 104.

In step S524, in a case where a folder name of the latest folder information is invalid, the storage destination determination unit 424 ends the processing with an argument error.

In step S525, in a case where the folder ID of the latest folder information and the folder ID of the acquired folder information match each other, the storage destination determination unit 424 requests folder creation by designating the folder name passed as an argument, and the parent folder ID passed as an argument.

In step S526, the storage destination determination unit 424 waits for one second.

In step S527, the storage destination determination unit 424 returns the created folder ID to the transfer control unit 423.

In step S528, the storage destination determination unit 424 acquires a folder ID of the latest folder information from the first management apparatus 104.

In step S529, the storage destination determination unit 424 acquires a folder name of the latest folder information from the first management apparatus 104.

In step S530, the storage destination determination unit 424 performs processing that is executed in a case where the folder ID of the latest folder information and the folder name of the latest folder information are valid. In a case where the folder ID and the folder name are valid, the storage destination determination unit 424 asks the first management apparatus 104 to check whether a folder matching the folder ID of the latest folder information and the folder name of the latest folder information exists. That is, the storage destination determination unit 424 asks a management apparatus of the transfer destination to check whether a storage destination folder exists, each time one image is transmitted. With such a configuration, a probability that transfer to an incorrect folder is tried and an error occurs is reduced.

In step S531, in a case where the matching folder exists, the storage destination determination unit 424 returns the folder ID of the latest folder information.

In step S532, in a case where the folder name of the latest folder information is valid, the storage destination determination unit 424 acquires a folder ID of an initial folder matching the folder name of the latest folder information and the parent folder ID passed as an argument, from the first management apparatus 104.

In step S533, in a case where the folder ID of the acquired initial folder is valid, the storage destination determination unit 424 returns the folder ID of the acquired initial folder to the transfer control unit 423.

In step S534, the storage destination determination unit 424 creates a folder by designating the folder name of the initial folder information, and the parent folder ID passed as an argument.

In step S535, the storage destination determination unit 424 waits for one second.

In step S536, the storage destination determination unit 424 returns the folder ID of the created folder to the transfer control unit 423.

In step S537, in a case where the acquisition of exclusive control right has failed, the storage destination determination unit 424 acquires a folder ID of an initial folder matching the folder name passed as an argument and the parent folder ID passed as an argument, from the first management apparatus 104.

In step S538, in a case where the acquired folder ID is valid, the storage destination determination unit 424 returns the acquired folder ID.

In step S539, the storage destination determination unit 424 returns null.

In this manner, in a case where storage destination creation trial has succeeded when a storage destination is created in a management apparatus, exclusive control right of the storage destination is acquired. On the other hand, in a case where storage destination creation trial has failed, a storage destination identifier of a storage destination is acquired from a transfer setting, and a folder corresponding to the storage destination identifier is set as a storage destination. With such a configuration, a storage destination is able to be acquired at higher speed as compared with a method of transferring an image to a storage destination acquired by requesting a storage destination in a management apparatus. Consequently, a standby time of the user is reduced.

### <Sequence of Storage Destination Determination Unit 424 in Step S525>

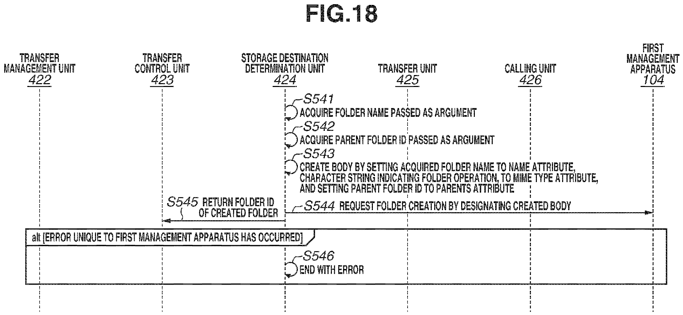

Next, a procedure of the processing that is executed by the storage destination determination unit 424 in step S525 will be described with reference to a sequence diagram illustrated in Fig. 18.

In step S541, the storage destination determination unit 424 acquires a folder name passed as an argument.

In step S542, the storage destination determination unit 424 acquires a parent folder ID passed as an argument.

In step S543, the storage destination determination unit 424 creates a body by setting the acquired folder name to a name attribute, a character string indicating a folder operation to a MIME Type attribute, and the parent folder ID to a parents attribute.

In step S544, the storage destination determination unit 424 requests the first management apparatus 104 to create a folder by designating the created body.

In step S545, the storage destination determination unit 424 returns a folder ID of the created folder to the transfer control unit 423.

In step S546, in a case where an error unique to the first management apparatus 104 has occurred, the storage destination determination unit 424 ends the processing with an error.

With such a configuration, in a case where sorting is executed on the first management apparatus 104, an image is transferred to a storage destination identified based on a transfer service name of transfer source and a sorting condition name. On the other hand, in a case where sorting is not executed, an image is transferred to a storage destination identified based on a transfer service name.

### <Sequence starting from Transfer Management Unit 422 in a Case Where Image Is Transferred to Second Management Apparatus 105>

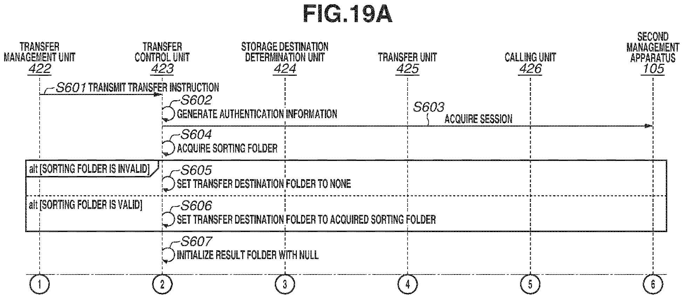

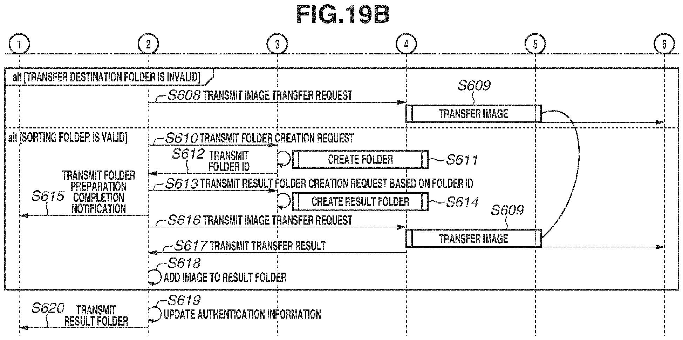

Next, a procedure of processing from the transfer management unit 422 in the case of transferring an image to the second management apparatus 105 will be described with reference to a sequence diagram illustrated in Figs. 19A and 19B.

In step S601, the transfer management unit 422 transmits an image transfer instruction to the transfer control unit 423.

In step S602, the transfer control unit 423 generates authentication information to perform an operation on the second management apparatus 105.

In step S603, the transfer control unit 423 acquires a session from the second management apparatus 105.

In step S604, the transfer control unit 423 acquires a sorting folder from folder information passed as an argument.

In step S605, in a case where the sorting folder is invalid, the transfer control unit 423 sets a transfer destination folder to None.

In step S606, in a case where the sorting folder is valid, the transfer control unit 423 sets a transfer destination folder to the acquired sorting folder.

In step S607, the transfer control unit 423 initializes a result folder with null.

In step S608, in a case where the transfer destination folder is invalid, the transfer control unit 423 transmits an image transfer request to the transfer unit 425.

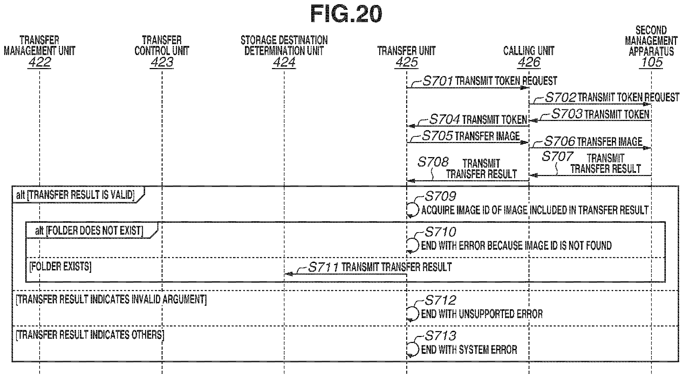

In step S609, the transfer unit 425 transfers an image to the second management apparatus 105. The details of the processing in step S609 will be described below with reference to Fig. 20.

In step S610, in a case where the sorting folder is valid, the transfer control unit 423 transmits a folder creation request to the storage destination determination unit 424.

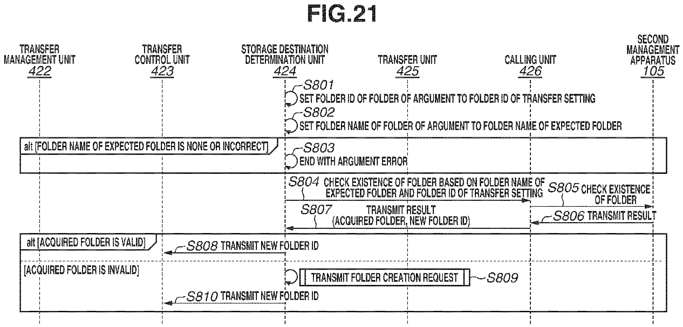

In step S611, the storage destination determination unit 424 creates a folder. The details of the processing in step S611 will be described below with reference to Fig. 21.

In step S612, the storage destination determination unit 424 transmits a folder ID of the created folder to the transfer control unit 423.

In step S613, the transfer control unit 423 transmits a result folder creation request to the storage destination determination unit 424 based on the folder ID.

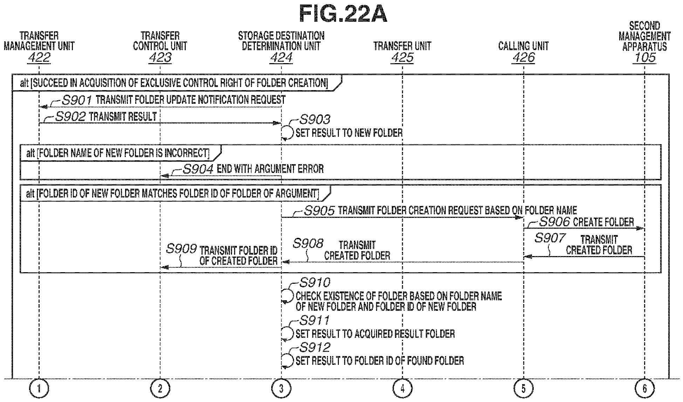

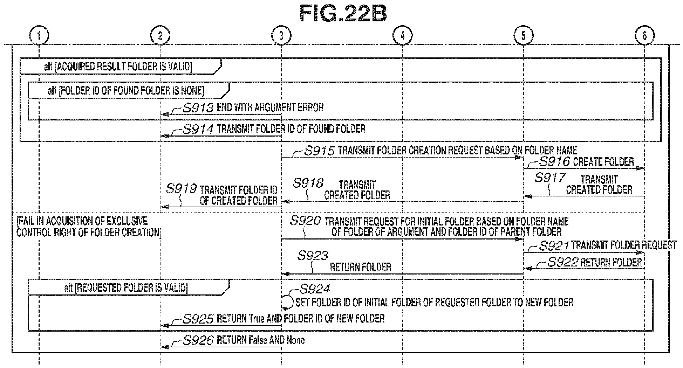

In step S614, the storage destination determination unit 424 creates a result folder. The details of the processing in step S614 will be described below with reference to Figs. 22A and 22B.

In step S615, the transfer control unit 423 notifies the transfer management unit 422 that folder preparation has been completed.

In step S616, the transfer control unit 423 transmits an image transfer request to the transfer unit 425.

In step S617, the transfer unit 425 transmits a transfer result to the transfer control unit 423.

In step S618, the transfer control unit 423 adds an image to the result folder.

In step S619, the transfer control unit 423 updates the authentication information.

In step S620, the transfer control unit 423 transmits information regarding the result folder to the transfer management unit 422.

### <Sequence of Transfer Unit 425 in Step S609>

Next, a flow of the processing that is executed by the transfer unit 425 in step S609 will be described with reference to a sequence diagram illustrated in Fig. 20.

In step S701, the transfer unit 425 transmits a token request to the calling unit 426.

In step S702, the calling unit 426 transmits a token request to the second management apparatus 105.

In step S703, the calling unit 426 acquires a token from the second management apparatus 105.

In step S704, the calling unit 426 transmits the acquired token to the transfer unit 425.

In step S705, the transfer unit 425 transfers an image to the calling unit 426.

In step S706, the calling unit 426 transfers an image to the second management apparatus 105.

In step S707, the calling unit 426 receives a transfer result from the second management apparatus 105.

In step S708, the calling unit 426 transmits the transfer result to the transfer unit 425.

In step S709, in a case where the transfer result is valid, the transfer unit 425 acquires an image ID of an image included in the transfer result.

In step S710, in a case where a folder does not exist, because an image ID is not found, the transfer unit 425 ends the processing with an error.

In step S711, in a case where a folder exists, the transfer unit 425 transmits the transfer result to the storage destination determination unit 424.

In step S712, in a case where the transfer result indicates an invalid argument, the transfer unit 425 ends the processing with an unsupported error.

In step S713, in a case where the transfer result indicates any result other than the above-described cases, the transfer unit 425 ends the processing with a system error.

### <Sequence of Storage Destination Determination Unit 424 in Step S611>

Next, a procedure of the processing that is executed by the storage destination determination unit 424 in step S611 will be described with reference to a sequence diagram illustrated in Fig. 21.

In step S801, the storage destination determination unit 424 sets a folder ID of a folder of an argument to a folder ID of a transfer setting.

In step S802, the storage destination determination unit 424 sets a folder name of a folder of an argument to a folder name of an expected folder.

In step S803, in a case where a folder name of an expected folder is None or incorrect, the storage destination determination unit 424 ends the processing with an argument error.

In step S804, the storage destination determination unit 424 requests the calling unit 426 to check the existence of a folder based on the folder name of the expected folder and the folder ID of the transfer setting.

In step S805, the calling unit 426 asks the second management apparatus 105 to checks the existence of a folder.

In step S806, the calling unit 426 acquires a check result from the second management apparatus 105.

In step S807, the calling unit 426 transmits a check result including information regarding the acquired folder and a folder ID of a new folder, to the storage destination determination unit 424.

In step S808, in a case where the acquired folder is valid, the storage destination determination unit 424 transmits a new folder ID to the transfer control unit 423.

In step S809, in a case where the acquired folder is invalid, the storage destination determination unit 424 transmits a folder creation request. The details of the processing in step S809 will be described below with reference to Figs. 22A and 22B.

In step S810, the storage destination determination unit 424 transmits a new folder ID to the transfer control unit 423.

### <Sequence of Storage Destination Determination Unit 424 in Step S809>

Next, a procedure of the processing that is executed by the storage destination determination unit 424 in step S809 will be described with reference to a sequence diagram illustrated in Figs. 22A and 22B.

In step S901, in a case where the acquisition of exclusive control right of folder creation has succeeded, the storage destination determination unit 424 transmits a folder update notification request to the transfer management unit 422.

In step S902, the transfer management unit 422 transmits a result to the storage destination determination unit 424.

In step S903, the storage destination determination unit 424 sets folder information included in the result to a new folder.

In step S904, in a case where a folder name of the new folder is incorrect, the storage destination determination unit 424 ends the processing with an argument error.

In step S905, in a case where a folder ID of the new folder matches a folder ID of a folder of an argument, the storage destination determination unit 424 transmits a folder creation request to the calling unit 426 based on the folder name.

In step S906, the calling unit 426 creates a folder in the second management apparatus 105.

In step S907, the calling unit 426 acquires information regarding the created folder from the second management apparatus 105.

In step S908, the calling unit 426 transmits information regarding the created folder to the storage destination determination unit 424.

In step S909, the storage destination determination unit 424 transmits a folder ID of the created folder to the transfer control unit 423.

In step S910, the storage destination determination unit 424 checks the existence of a folder based on a folder name of the new folder and the folder ID of the new folder.

In step S911, the storage destination determination unit 424 sets a result to the acquired result folder.

In step S912, the storage destination determination unit 424 sets the result to a folder ID of a found folder.

In step S913, in a case where the acquired result folder is valid, and in a case where the folder ID of the found folder is None, the storage destination determination unit 424 ends the processing with an argument error.

In step S914, the storage destination determination unit 424 transmits the folder ID of the found folder to the transfer control unit 423.

In step S915, the storage destination determination unit 424 transmits a folder creation request to the calling unit 426 based on the folder name.

In step S916, the calling unit 426 creates a folder in the second management apparatus 105.

In step S917, the calling unit 426 acquires information regarding the created folder from the second management apparatus 105.

In step S918, the calling unit 426 transmits information regarding the created folder to the storage destination determination unit 424.

In step S919, the storage destination determination unit 424 transmits a folder ID of the created folder to the transfer control unit 423.

In step S920, in a case where the acquisition of exclusive control right of folder creation has failed, the storage destination determination unit 424 transmits a request for an initial folder to the calling unit 426 based on a folder name of a folder of an argument and a folder ID of a parent folder.

In step S921, the calling unit 426 transmits a folder request to the second management apparatus 105.

In step S922, the calling unit 426 acquires information regarding a folder from the second management apparatus 105.

In step S923, the calling unit 426 transmits information regarding a folder to the storage destination determination unit 424.

In step S924, in a case where the requested folder is valid, the storage destination determination unit 424 sets a folder ID of an initial folder of the requested folder to a new folder.

In step S925, the storage destination determination unit 424 transmits True and a folder ID of a new folder to the transfer control unit 423.

In step S926, the storage destination determination unit 424 transmits False and None to the transfer control unit 423.

### <Sequence of Storage Destination Determination Unit 424 in Step S614>

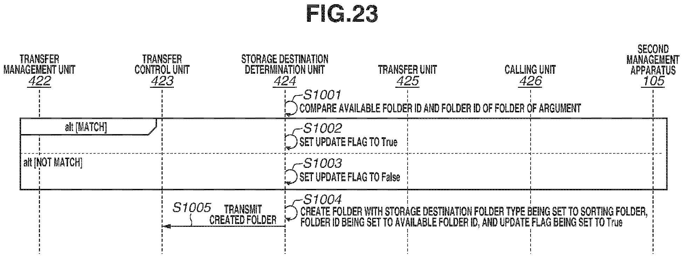

Next, a procedure of the processing that is executed by the storage destination determination unit 424 in step S614 will be described with reference to a sequence diagram illustrated in Fig. 23.

In step S1001, the storage destination determination unit 424 compares an available folder ID and a folder ID of a folder of an argument.

In step S1002, in a case where both folder IDs match each other, the storage destination determination unit 424 sets an update flag to True.

In step S1003, in a case where both folder IDs does not match each other, the storage destination determination unit 424 sets an update flag to False.

In step S1004, the storage destination determination unit 424 creates a folder with a storage destination folder type being set to sorting folder, a folder ID being set to the available folder ID, and an update flag being set to True.

In step S1005, the storage destination determination unit 424 transmits the created folder to the transfer control unit 423.

With such a configuration, in a case where sorting is executed on the second management apparatus 105, an image is transferred to a storage destination identified based on a sorting condition name. On the other hand, in a case where sorting is not executed, an image is transferred to a storage destination immediately below a storage destination of a storage region allocated to the user of the second management apparatus 105.

### <Sequence from Transfer Management Unit 422 in a Case Where Image Is Transferred to Third Management Apparatus 110>

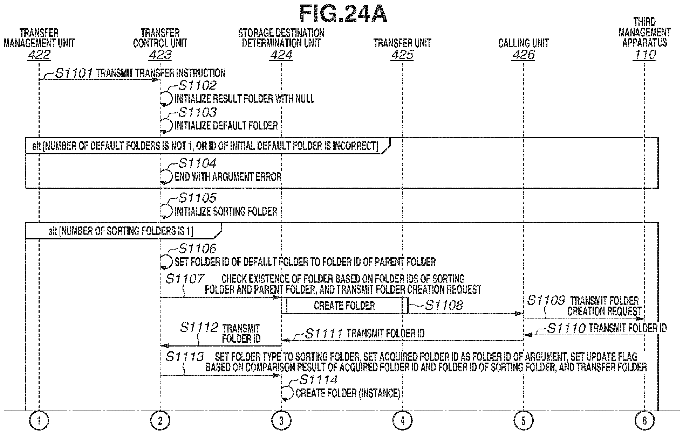

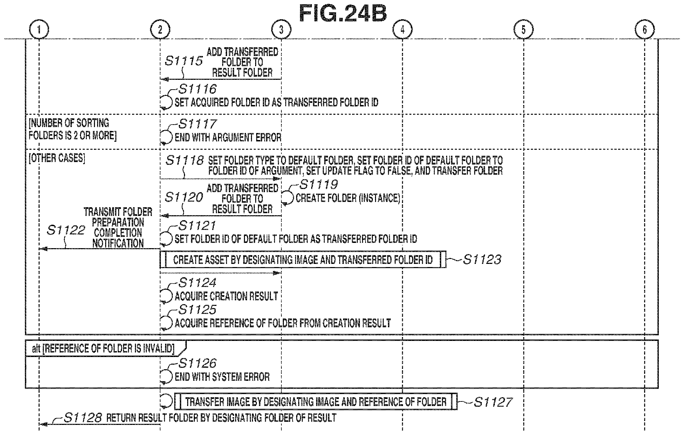

Next, a procedure of processing starting from the transfer management unit 422 in a case of transferring an image to the third management apparatus 110 will be described with reference to a sequence diagram illustrated in Figs. 24A and 24B.

In step S1101, the transfer management unit 422 transmits a transfer instruction to the transfer control unit 423.

In step S1102, the transfer control unit 423 initializes a result folder with null.

In step S1103, the transfer control unit 423 initializes a default folder.

In step S1104, in a case where the number of default folders is not 1, or an ID of an initial default folder is incorrect, the transfer control unit 423 ends the processing with an argument error.

In step S1105, the transfer control unit 423 initializes a sorting folder.

In step S1106, in a case where the number of sorting folders is 1, the transfer control unit 423 sets a folder ID of a default folder to a folder ID of a parent folder.

In step S1107, the transfer control unit 423 checks the existence of a folder based on folder IDs of the sorting folder and the parent folder and transmits a folder creation request to the storage destination determination unit 424.

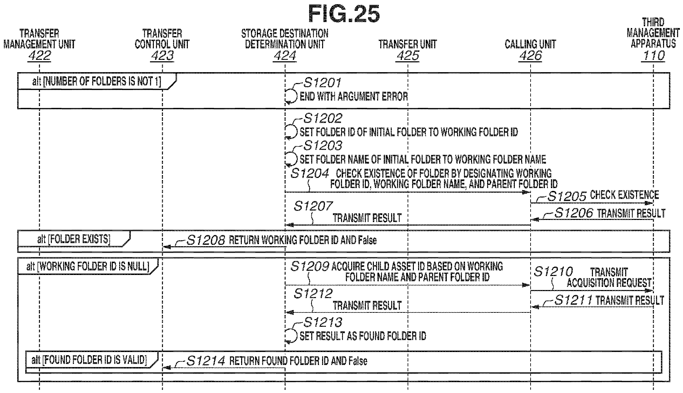

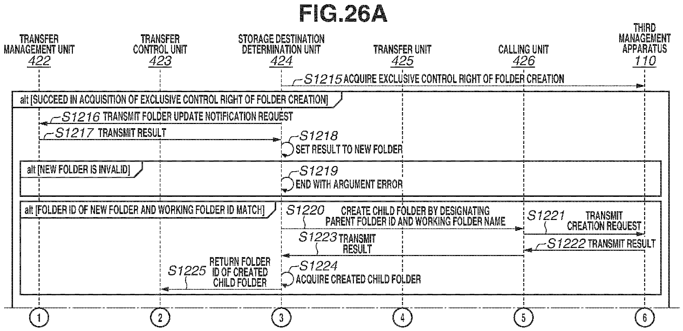

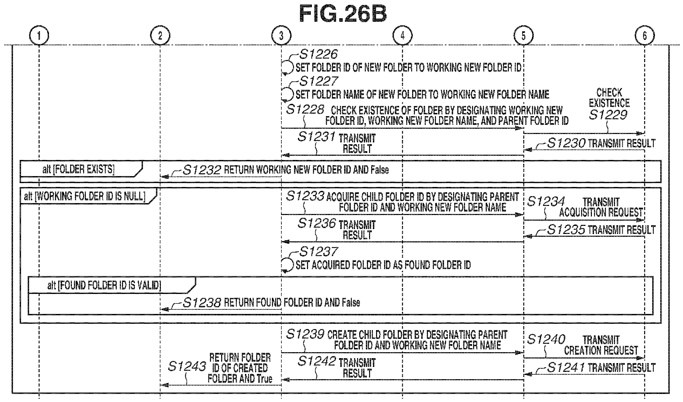

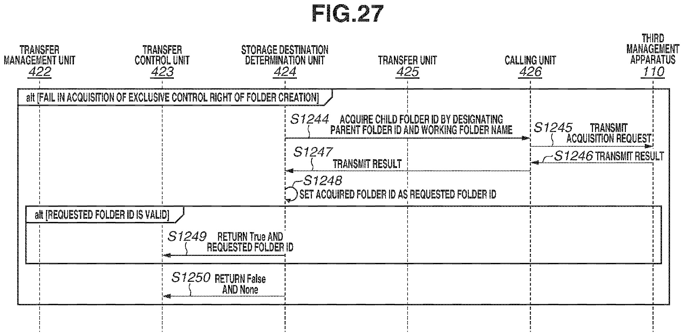

In step S1108, the storage destination determination unit 424 transmits a folder creation request to the calling unit 426. The details of the processing in step S1108 will be described below with reference to Figs. 25 to 27.

In step S1109, the calling unit 426 creates a folder in the third management apparatus 110.

In step S1110, the calling unit 426 acquires a folder ID of the created folder from the third management apparatus 110.

In step S1111, the calling unit 426 transmits the folder ID to the storage destination determination unit 424.

In step S1112, the storage destination determination unit 424 transmits the folder ID to the transfer control unit 423.

In step S1113, the transfer control unit 423 sets a folder type to sorting folder, and sets the acquired folder ID as a folder ID of an argument. The transfer control unit 423 further sets an update flag based on a comparison result of the acquired folder ID and a folder ID of the sorting folder, and transfers a folder to the storage destination determination unit 424.

In step S1114, the storage destination determination unit 424 creates an instance of the folder.

In step S1115, the storage destination determination unit 424 adds the transferred folder to a result folder.

In step S1116, the transfer control unit 423 sets the acquired folder ID as a transferred folder ID.

In step S1117, in a case where the number of sorting folders is two or more, the transfer control unit 423 ends the processing with an argument error.

In step S1118, in a case other than above-described cases, the transfer control unit 423 sets a folder type to default folder, sets a folder ID of the default folder to a folder ID of an argument, sets an update flag to False, and transfers a folder to the storage destination determination unit 424.

In step S1119, the transfer control unit 423 creates an instance of the folder.

In step S1120, the transfer control unit 423 adds the transferred folder to a result folder.

In step S1121, the transfer control unit 423 sets the folder ID of the default folder as a transferred folder ID.

In step S1122, the transfer control unit 423 notifies the transfer management unit 422 that folder preparation has been completed.

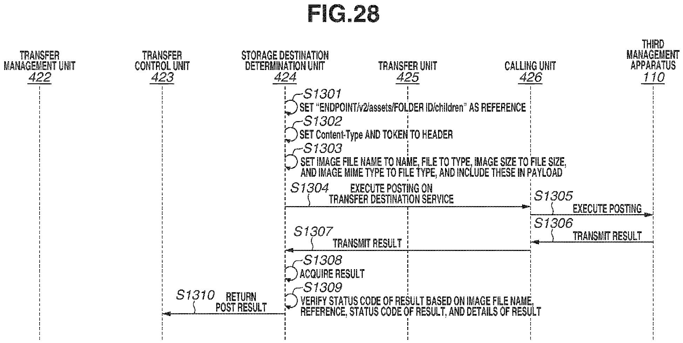

In step S1123, the transfer control unit 423 creates an asset by designating an image and the transferred folder ID. The details of the processing in step S1123 will be described below with reference to Fig. 28.

In step S1124, the transfer control unit 423 acquires a creation result.

In step S1125, the transfer control unit 423 acquires a reference of a folder from the creation result.

In step S1126, in a case where a reference of a folder is invalid, the transfer control unit 423 ends the processing with a system error.

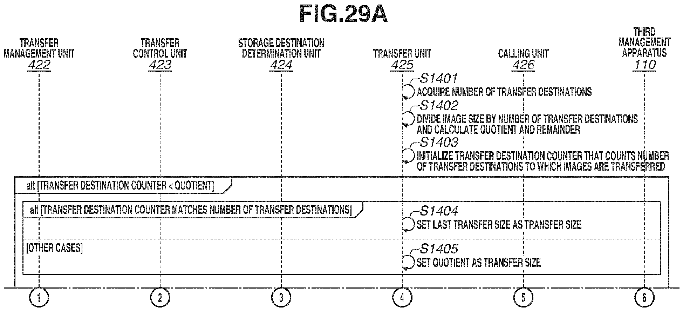

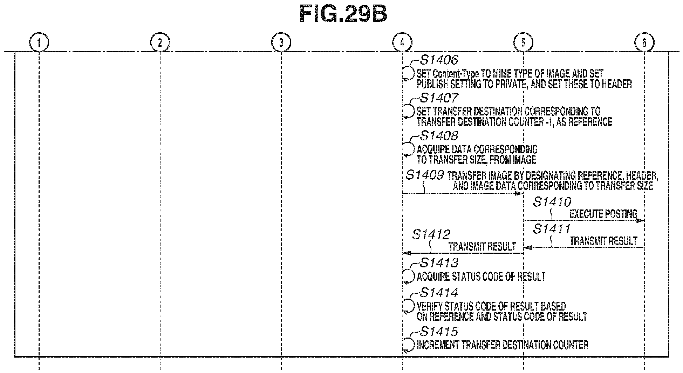

In step S1127, the transfer control unit 423 transfers an image by designating an image and the reference of the folder. The details of the processing in step S1127 will be described below with reference to Figs. 29A and 29B.

In step S1128, the transfer control unit 423 transmits a result folder to the transfer management unit 422 by designating a folder of a result.

### <Sequence of Storage Destination Determination Unit 424 in Step S1108>

Next, a procedure of the processing that is executed by the storage destination determination unit 424 in step S1108 will be described with reference to sequence diagrams illustrated in Figs. 25 to 27.

In step S1201, in a case where the number of folders is not one, the storage destination determination unit 424 ends the processing with an argument error.

In step S1202, the storage destination determination unit 424 sets a folder ID of an initial folder to a working folder ID.

In step S1203, the storage destination determination unit 424 sets a folder name of the initial folder to a working folder name.

In step S1204, the storage destination determination unit 424 transmits a folder existence check request to the calling unit 426 by designating the working folder ID, the working folder name, and the parent folder ID.

In step S1205, the calling unit 426 transmits an existence check request to the third management apparatus 110.

In step S1206, the calling unit 426 acquires a result from the third management apparatus 110.

In step S1207, the calling unit 426 transmits the result to the storage destination determination unit 424.

In step S1208, in a case where a folder exists, the storage destination determination unit 424 transmits the working folder ID and False to the transfer management unit 422.

In step S1209, in a case where the working folder ID is null, the storage destination determination unit 424 transmits a request for acquisition of a child asset ID to the calling unit 426 based on the working folder name and the parent folder ID.

In step S1210, the calling unit 426 transmits a request for acquisition of a child asset ID from the third management apparatus 110.

In step S1211, the calling unit 426 acquires a result from the third management apparatus 110.

In step S1212, the calling unit 426 transmits the result to the storage destination determination unit 424.

In step S1213, the storage destination determination unit 424 sets the received result as a found folder ID.

In step S1214, in a case where the found folder ID is valid, the storage destination determination unit 424 transmits the found folder ID and False to the transfer control unit 423.

In step S1215, the storage destination determination unit 424 acquires exclusive control right of folder creation from the third management apparatus 110.

In step S1216, in a case where the acquisition of exclusive control right of folder creation has succeeded, the storage destination determination unit 424 transmits a folder update notification request to the transfer management unit 422.

In step S1217, the transfer management unit 422 transmits a result to the storage destination determination unit 424.

In step S1218, the storage destination determination unit 424 sets information regarding a folder included in the result to a new folder.

In step S1219, in a case where the new folder is invalid, the storage destination determination unit 424 ends the processing with an argument error.

In step S1220, in a case where a folder ID of the new folder and the working folder ID match each other, the storage destination determination unit 424 transmits a child folder creation request to the calling unit 426 by designating the parent folder ID and the working folder name.

In step S1221, the calling unit 426 transmits a creation request to the third management apparatus 110.

In step S1222, the calling unit 426 acquires a result from the third management apparatus 110.

In step S1223, the calling unit 426 transmits the result to the storage destination determination unit 424.

In step S1224, the storage destination determination unit 424 acquires information regarding the created child folder.

In step S1225, the storage destination determination unit 424 transmits a folder ID of the created child folder to the transfer control unit 423.

In step S1226, the storage destination determination unit 424 sets the folder ID of the new folder to a working new folder ID.

In step S1227, the storage destination determination unit 424 sets a folder name of the new folder to a working new folder name.

In step S1228, the storage destination determination unit 424 transmits a folder existence check request to the calling unit 426 by designating the working new folder ID, the working new folder name, and the parent folder ID.

In step S1229, the calling unit 426 transmits an existence check request to the third management apparatus 110.

In step S1230, the calling unit 426 acquires a result from the third management apparatus 110.

In step S1231, the calling unit 426 transmits the result to the storage destination determination unit 424.

In step S1232, in a case where a folder exists, the storage destination determination unit 424 transmits the working new folder ID and False to the transfer control unit 423.

In step S1233, in a case where the working folder ID is null, the storage destination determination unit 424 transmits a request for acquisition of a child folder ID to the calling unit 426 by designating the parent folder ID and the working new folder name.

In step S1234, the calling unit 426 transmits a request for acquisition of a child folder ID to the third management apparatus 110.

In step S1235, the calling unit 426 acquires a result from the third management apparatus 110.

In step S1236, the calling unit 426 transmits the result to the storage destination determination unit 424.

In step S1237, the storage destination determination unit 424 sets the acquired folder ID as a found folder ID.

In step S1238, in a case where the found folder ID is valid, the storage destination determination unit 424 transmits the found folder ID and False to the transfer control unit 423.

In step S1239, the storage destination determination unit 424 transmits a child folder creation request to the calling unit 426 by designating the parent folder ID and the working new folder name.

In step S1240, the calling unit 426 transmits a child folder creation request to the third management apparatus 110.

In step S1241, the calling unit 426 acquires a result from the third management apparatus 110.

In step S1242, the calling unit 426 transmits the result to the storage destination determination unit 424.

In step S1243, the storage destination determination unit 424 transmits a folder ID of the created folder and True to the transfer control unit 423.

In step S1244, in a case where the acquisition of exclusive control right of folder creation has failed, the storage destination determination unit 424 transmits a request for acquisition of a child folder ID to the calling unit 426 by designating the parent folder ID and the working folder name.

In step S1245, the calling unit 426 transmits a request for acquisition of a child folder ID to the third management apparatus 110.

In step S1246, the calling unit 426 acquires a result from the third management apparatus 110.

In step S1247, the calling unit 426 transmits the result to the storage destination determination unit 424.

In step S1248, the storage destination determination unit 424 sets the acquired folder ID as a requested folder ID.

In step S1249, in a case where the requested folder ID is valid, the storage destination determination unit 424 transmits True and the requested folder ID to the transfer control unit 423.

In step S1250, the storage destination determination unit 424 transmits False and None to the transfer control unit 423.

### <Sequence of Transfer Control Unit 423 in Step S1123>

Next, a procedure of the processing that is executed by the transfer control unit 423 in step S1123 will be described with reference to a sequence diagram illustrated in Fig. 28.

In step S1301, the storage destination determination unit 424 sets "endpoint/v2/assets/folder ID/children" as a reference.

In step S1302, the storage destination determination unit 424 sets a Content-Type and a token to a header.

In step S1303, the storage destination determination unit 424 sets an image file name to name, "file" to the type, the image size to the file size, and the MIME type of the image to the file type, and includes these in the payload.

In step S1304, the storage destination determination unit 424 executes posting on a transfer destination service via the calling unit 426.

In step S1305, the calling unit 426 executes posting on the third management apparatus 110.

In step S1306, the calling unit 426 acquires a result from the third management apparatus 110.

In step S1307, the calling unit 426 transmits the result to the storage destination determination unit 424.

In step S1308, the storage destination determination unit 424 acquires the result.

In step S1309, the storage destination determination unit 424 verifies a status code of the result based on an image file name, a reference, the status code of the result, and the details of the result.

In step S1310, the storage destination determination unit 424 transmits a POST result to the transfer control unit 423.

### <Sequence of Transfer Control Unit 423 in Step S1127>

Next, a procedure of the processing that is executed by the transfer control unit 423 in step S1127 will be described with reference to a sequence diagram illustrated in Figs. 29A and 29B.

In step S1401, the transfer unit 425 acquires the number of transfer destinations.

In step S1402, the transfer unit 425 divides an image size by the number of transfer destinations and calculates a quotient and a remainder.

In step S1403, the transfer unit 425 initializes a transfer destination counter that counts the number of transfer destinations to which images are transferred.

In a case where a number indicated by the transfer destination counter is smaller than the quotient, in step S1404, the transfer unit 425 repeats the following processing. In a case where a number indicated by the transfer destination counter matches the number of transfer destinations, the transfer unit 425 sets the last transfer size as a transfer size.

In step S1405, in other cases, the transfer unit 425 sets the quotient as a transfer size.

In step S1406, the transfer unit 425 sets a Content-Type to MIME type of an image and sets a publish setting to private, and sets these to a header.

In step S1407, the transfer unit 425 sets a transfer destination corresponding to a number obtained by subtracting 1 from the number indicated by the transfer destination counter, as a reference.

In step S1408, the transfer unit 425 acquires data corresponding to the transfer size, from an image.

In step S1409, the transfer unit 425 transfers an image to the calling unit 426 by designating a reference, a header, and image data corresponding to the transfer size.

In step S1410, the calling unit 426 executes posting on the third management apparatus 110.

In step S1411, the calling unit 426 acquires a result from the third management apparatus 110.

In step S1412, the calling unit 426 transmits the result to the transfer unit 425.

In step S1413, the transfer unit 425 acquires a status code of the result.

In step S1414, the transfer unit 425 verifies the status code of the result based on the reference and the status code of the result.

In step S1415, the transfer unit 425 increments the transfer destination counter.

With such a configuration, in a case where sorting is executed on the third management apparatus 110, an image is transferred to a storage destination identified based on a transfer source service name and a sorting condition name, or a storage destination identified based on a predetermined character string and a sorting condition name. On the other hand, in a case where sorting is not executed, an image is transferred to a storage destination identified based on a transfer source service name, or a storage destination identified based on a predetermined character string.

### <Sequence starting from Transfer Management Unit 422 in a Case Where Image Is Transferred to Fourth Management Apparatus 111>

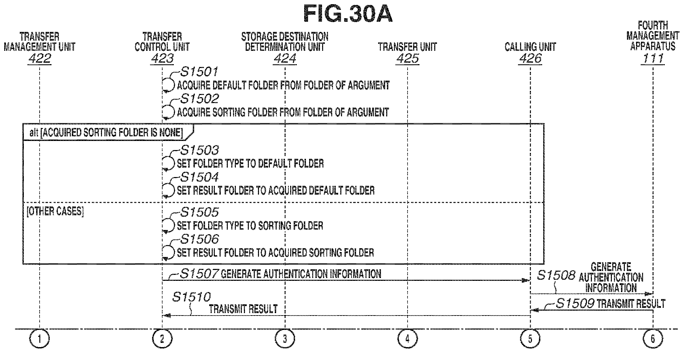

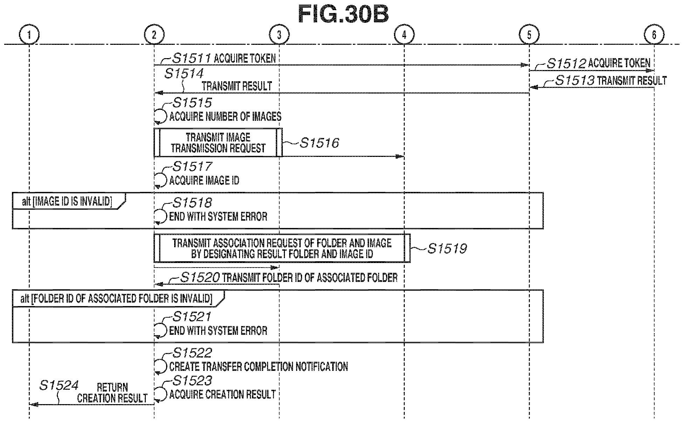

Next, a procedure of processing from the transfer management unit 422 in a case of transferring an image to the fourth management apparatus 111 will be described with reference to a sequence diagram illustrated in Figs. 30A and 30B.

In step S1501, the transfer control unit 423 acquires a default folder from a folder of an argument.

In step S1502, the transfer control unit 423 acquires a sorting folder from the folder of the argument.

In step S1503, in a case where the acquired sorting folder is None, the transfer control unit 423 sets a folder type to a default folder.

In step S1504, the transfer control unit 423 sets a result folder to the acquired default folder.

In step S1505, in other cases, the transfer control unit 423 sets a folder type to a sorting folder.

In step S1506, the transfer control unit 423 sets a result folder to the acquired sorting folder.

In step S1507, the transfer control unit 423 generates authentication information.

In step S1508, the calling unit 426 generates authentication information.

In step S1509, the calling unit 426 acquires a result.

In step S1510, the calling unit 426 transmits the result to the transfer control unit 423.

In step S1511, the transfer control unit 423 transmits a token acquisition request to the calling unit 426.

In step S1512, the calling unit 426 transmits a token acquisition request to the fourth management apparatus 111.

In step S1513, the calling unit 426 acquires a result from the fourth management apparatus 111.

In step S1514, the calling unit 426 transmits the result to the transfer control unit 423.

In step S1515, the transfer control unit 423 acquires the number of images.

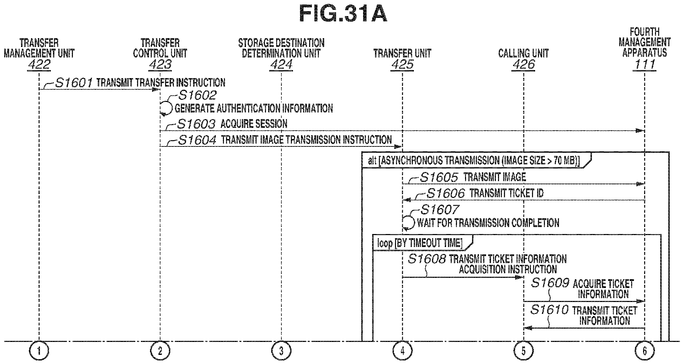

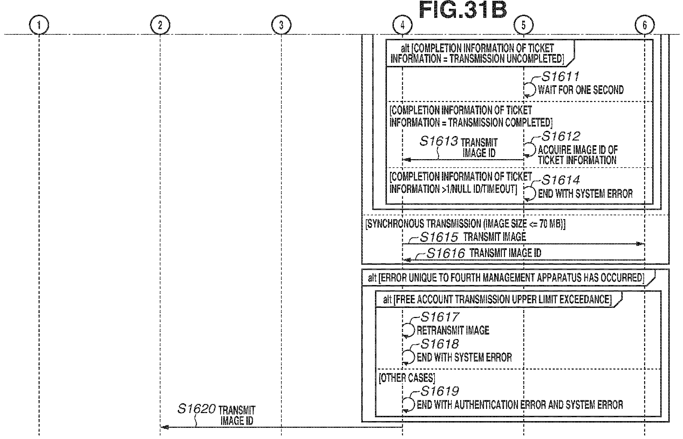

In step S1516, the transfer control unit 423 transmits an image transmission request to the transfer unit 425. The details of the processing in step S1516 will be described below with reference to Figs. 31A and 31B.

In step S1517, the transfer control unit 423 acquires an image ID.

In step S1518, in a case where the image ID is invalid, the transfer control unit 423 ends the processing with a system error.

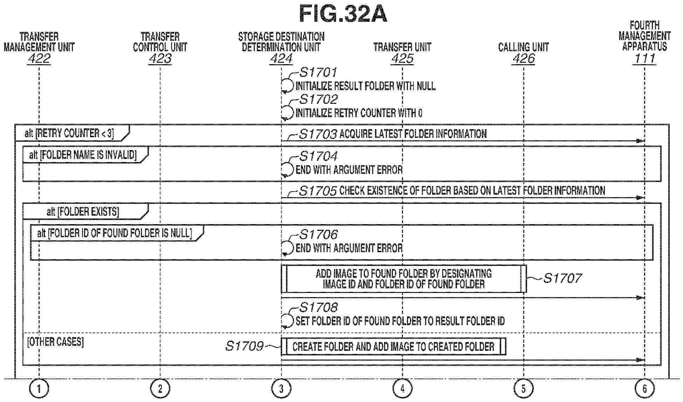

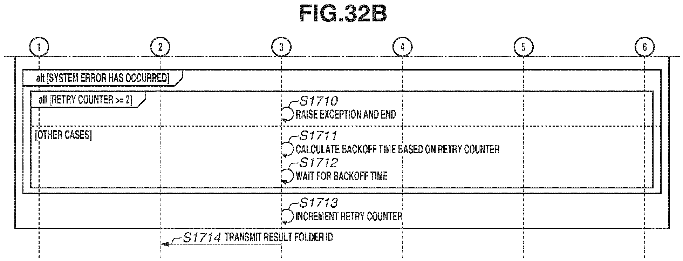

In step S1519, the transfer control unit 423 transmits an association request of a folder and an image to the storage destination determination unit 424 by designating a result folder and an image ID. The details of the processing in step S1519 will be described below with reference to Figs. 32A and 32B to 35.

In step S1520, the storage destination determination unit 424 transmits a folder ID of the associated folder to the transfer control unit 423.

In step S1521, in a case where a folder ID of the associated folder is invalid, the transfer control unit 423 ends the processing with a system error.

In step S1522, the transfer control unit 423 creates a transfer completion notification.

In step S1523, the transfer control unit 423 acquires a creation result.

In step S1524, the transfer control unit 423 transmits the creation result to the transfer management unit 422.

### <Sequence of Transfer Control Unit 423 in Step S1516>

Next, a procedure of the processing that is executed by the transfer control unit 423 in step S1516 will be described with reference to a sequence diagram illustrated in Figs. 31A and 31B.

In step S1601, the transfer management unit 422 transmits a transfer instruction to the transfer control unit 423.

In step S1602, the transfer control unit 423 generates authentication information.

In step S1603, the transfer control unit 423 acquires a session from the fourth management apparatus 111.

In step S1604, the transfer control unit 423 transmits an image transmission instruction to the transfer unit 425.

In step S1605, in the case of asynchronous transmission (an image size is larger than 70 megabyte (MB)) the transfer unit 425 transmits an image to the fourth management apparatus 111.

In step S1606, the transfer unit 425 acquires a ticket ID from the fourth management apparatus 111.

In step S1607, the transfer unit 425 waits for transmission completion.

In step S1608, the transfer unit 425 executes the following by a timeout time. The transfer unit 425 transmits a ticket information acquisition instruction to the calling unit 426.

In step S1609, the calling unit 426 transmits a ticket information acquisition request to the fourth management apparatus 111.

In step S1610, the calling unit 426 acquires ticket information from the fourth management apparatus 111.

In step S1611, in a case where completion information of ticket information indicates transmission uncompleted, the calling unit 426 waits for one second.

In step S1612, in a case where completion information of ticket information indicates transmission completed, the calling unit 426 acquires an image ID of ticket information.

In step S1613, the calling unit 426 transmits the image ID to the transfer unit 425.

In step S1614, in a case where completion information of ticket information is larger than 1, null ID, or the processing times out, the transfer unit 425 ends the processing with a system error. The repetitive processing from step S1608 is up to this step.

In step S1615, in the case of synchronous transmission (an image size is equal to or smaller than 70 MB), the transfer unit 425 transmits an image to the fourth management apparatus 111.

In step S1616, the transfer unit 425 acquires an image ID from the fourth management apparatus 111.

In step S1617, in a case where an error unique to the fourth management apparatus 111 has occurred, and in a case where a transmission amount has exceeded a transmission upper limit for a free account, the transfer unit 425 retransmits an image.

In step S1618, the transfer unit 425 ends the processing with a system error.

In step S1619, in other cases, the transfer unit 425 ends the processing with an authentication error and a system error.

In step S1620, the transfer unit 425 transmits an image ID to the transfer control unit 423.

### <Sequence of Transfer Control Unit 423 in Step S1519>

Next, a procedure of the processing that is executed by the transfer control unit 423 in step S1519 will be described with reference to a sequence diagram illustrated in Figs. 32A and 32B.

In step S1701, the storage destination determination unit 424 initializes a result folder ID with null.

In step S1702, the storage destination determination unit 424 initializes a retry counter with 0.

In step S1703, in a case where a number indicated by the retry counter is smaller than 3, the storage destination determination unit 424 repeats the processing up to step S1712. The storage destination determination unit 424 acquires latest folder information from the fourth management apparatus 111.

In step S1704, in a case where a folder name is invalid, the storage destination determination unit 424 ends the processing with an argument error.

In step S1705, the storage destination determination unit 424 transmits a folder existence check request to the fourth management apparatus 111 based on the latest folder information.

In step S1706, in a case where a folder exists, and in a case where a folder ID of a found folder is null, the storage destination determination unit 424 ends the processing with an argument error.

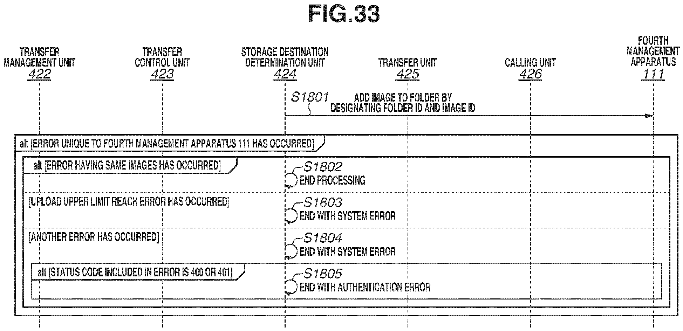

In step S1707, the storage destination determination unit 424 transmits a request of adding an image to a folder, to the fourth management apparatus 111 by designating an image ID and a folder ID of a found folder. The details of the processing in step S1707 will be described below with reference to Fig. 33.

In step S1708, the storage destination determination unit 424 sets the folder ID of the found folder to a result folder ID.

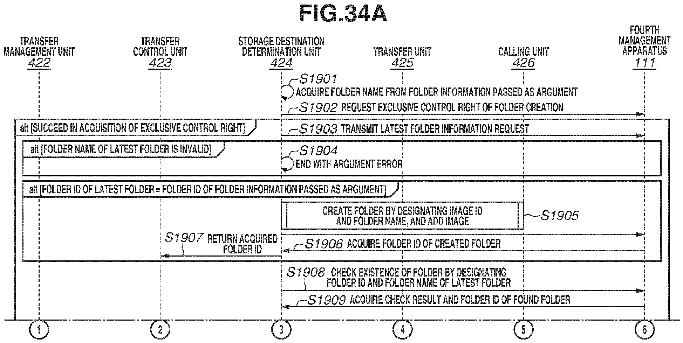

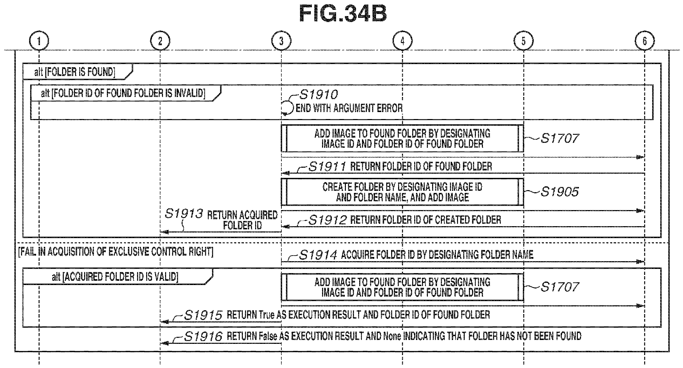

In step S1709, in other cases, the storage destination determination unit 424 creates a folder and adds an image to the folder. The details of the processing in step S1709 will be described below with reference to Figs. 34A and 34B.

In step S1710, in a case where a system error has occurred, and in a case where a number indicated by the retry counter is equal to or larger than 2, the storage destination determination unit 424 raises exception and ends the processing.

In step S1711, in other cases, the storage destination determination unit 424 calculates a backoff time based on the retry counter.

In step S1712, the storage destination determination unit 424 waits for the backoff time.

In step S1713, the storage destination determination unit 424 increments the retry counter.

In step S1714, the storage destination determination unit 424 transmits a result folder ID.

### <Sequence of Storage Destination Determination Unit 424 in Step S1707>

Next, a procedure of the processing that is executed by the storage destination determination unit 424 in step S1707 will be described with reference to a sequence diagram illustrated in Fig. 33.

In step S1801, the storage destination determination unit 424 transmits a request of adding an image to a folder, to the fourth management apparatus 111 by designating a folder ID and an image ID.

In step S1802, in a case where an error unique to the fourth management apparatus 111 has occurred, and in a case where an error having the same images has occurred, the storage destination determination unit 424 ends the processing.

In step S1803, in a case where an upload upper limit reach error has occurred, the storage destination determination unit 424 ends the processing with a system error.

In step S1804, in a case where another error has occurred, the storage destination determination unit 424 ends the processing with a system error.

In step S1805, in a case where a status code included in an error is 400 or 401, the storage destination determination unit 424 ends the processing with an authentication error.

### <Sequence of Storage Destination Determination Unit 424 in Step S1709>

Next, a procedure of the processing that is executed by the storage destination determination unit 424 in step S1709 will be described with reference to a sequence diagram illustrated in Figs. 34A and 34B.

In step S1901, the storage destination determination unit 424 acquires a folder name from folder information passed as an argument.

In step S1902, the storage destination determination unit 424 requests exclusive control right of folder creation from the fourth management apparatus 111.

In step S1903, in a case where the acquisition of exclusive control right has succeeded, the storage destination determination unit 424 transmits a latest folder information request to the fourth management apparatus 111.

In step S1904, in a case where a folder name of a latest folder is invalid, the storage destination determination unit 424 ends the processing with an argument error.

In step S1905, in a case where the folder ID of the latest folder matches a folder ID of folder information passed as an argument, the storage destination determination unit 424 requests the fourth management apparatus 111 to create a folder and add an image by designating an image ID and a folder name.

In step S1906, the storage destination determination unit 424 acquires a folder ID of the created folder from the fourth management apparatus 111.

In step S1907, the storage destination determination unit 424 returns the acquired folder ID to the transfer control unit 423.

In step S1908, the storage destination determination unit 424 transmits a folder existence check request to the fourth management apparatus 111 by designating a folder ID and a folder name of the latest folder.

In step S1909, the storage destination determination unit 424 acquires a check result and a folder ID of a found folder from the fourth management apparatus 111.

In step S1910, in a case where a folder is found, and in a case where a folder ID of the found folder is invalid, the storage destination determination unit 424 ends the processing with an argument error.

In step S1911, the storage destination determination unit 424 acquires the folder ID of the found folder from the fourth management apparatus 111.

In step S1912, the storage destination determination unit 424 acquires a folder ID of a created folder from the fourth management apparatus 111.

In step S1913, the storage destination determination unit 424 returns the acquired folder ID to the transfer control unit 423.

In step S1914, in a case where the acquisition of exclusive control right has failed, the storage destination determination unit 424 acquires a folder ID from the fourth management apparatus 111 by designating a folder name.

In step S1915, in a case where the acquired folder ID is valid, the storage destination determination unit 424 returns True as an execution result and a folder ID of the found folder to the transfer control unit 423.

In step S1916, the storage destination determination unit 424 returns False as an execution result and None indicating that a folder has not been found, to the transfer control unit 423.

### <Sequence of Storage Destination Determination Unit 424 in Step S1905>

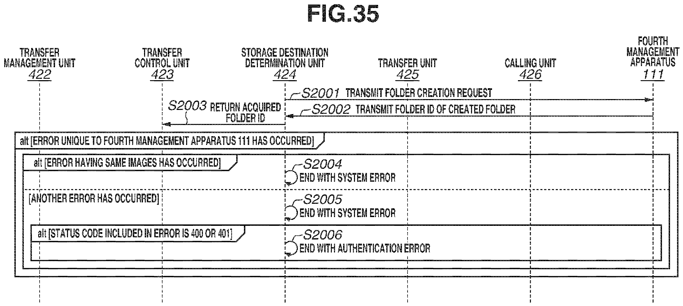

Next, a procedure of the processing that is executed by the storage destination determination unit 424 in step S1905 will be described with reference to a sequence diagram illustrated in Fig. 35.

In step S2001, the storage destination determination unit 424 transmits a folder creation request to the fourth management apparatus 111.

In step S2002, the storage destination determination unit 424 acquires a folder ID of a created folder from the fourth management apparatus 111.

In step S2003, the storage destination determination unit 424 returns the acquired folder ID to the transfer control unit 423.

In step S2004, in a case where an error unique to the fourth management apparatus 111 has occurred, and in a case where an error having the same images has occurred, the storage destination determination unit 424 ends the processing with a system error.

In step S2005, in a case where another error has occurred, the storage destination determination unit 424 ends the processing with a system error.

In step S2006, in a case where a status code included in an error is 400 or 401, the storage destination determination unit 424 ends the processing with an authentication error.

With such a configuration, in a case where sorting is executed on the fourth management apparatus 111, an image is transferred to a storage destination identified based on a sorting condition name. On the other hand, in a case where sorting is not executed, an image is transferred to a storage destination identified based on a transfer source service name.

### <Sequence starting from Transfer Management Unit 422 in a Case Where Image Is Transferred to Fifth Management Apparatus 112>

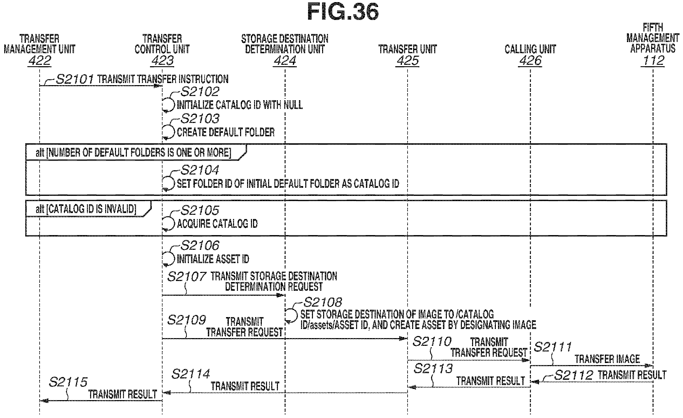

Next, a procedure of processing from the transfer management unit 422 in a case of transferring an image to the fifth management apparatus 112 will be described with reference to a sequence diagram illustrated in Fig. 36.

In step S2101, the transfer management unit 422 transmits a transfer instruction to the transfer control unit 423.

In step S2102, the transfer control unit 423 initializes a catalog ID with null.

In step S2103, the transfer control unit 423 creates a default folder.

In step S2104, in a case where the number of default folders is one or more, the transfer control unit 423 sets a folder ID of an initial default folder as a catalog ID.

In step S2105, in a case where the catalog ID is invalid, the transfer control unit 423 acquires the catalog ID.

In step S2106, the transfer control unit 423 initializes an asset ID.

In step S2107, the transfer control unit 423 transmits a storage destination determination request to the storage destination determination unit 424.

In step S2108, the storage destination determination unit 424 sets a storage destination of an image to /catalog ID/assets/asset ID, and creates an asset by designating an image.

In step S2109, the transfer control unit 423 transmits a transfer request to the transfer unit 425.

In step S2110, the transfer unit 425 transmits a transfer request to the calling unit 426.

In step S2111, the calling unit 426 transfers an image to the fifth management apparatus 112.

In step S2112, the calling unit 426 acquires a result from the fifth management apparatus 112.

In step S2113, the transfer unit 425 acquires a result from the calling unit 426.

In step S2114, the transfer control unit 423 acquires a result from the transfer unit 425.

In step S2115, the transfer management unit 422 acquires a result from the transfer control unit 423.

With such a configuration, irrespective of whether sorting is executed on the fifth management apparatus 112, an image is transferred to a storage destination immediately below a storage destination of a storage region allocated to the user by the fifth management apparatus 112.

In the present embodiment, a storage destination set in the case of transferring an image to each management apparatus has been described, but the storage destination is not limited to this, and in the case of transferring an image to the sixth management apparatus 113, irrespective of whether sorting is executed, an image may be transferred without changing a storage destination.

### <Effect to Be Obtained in a Case of Transferring Image to Each Management Apparatus>

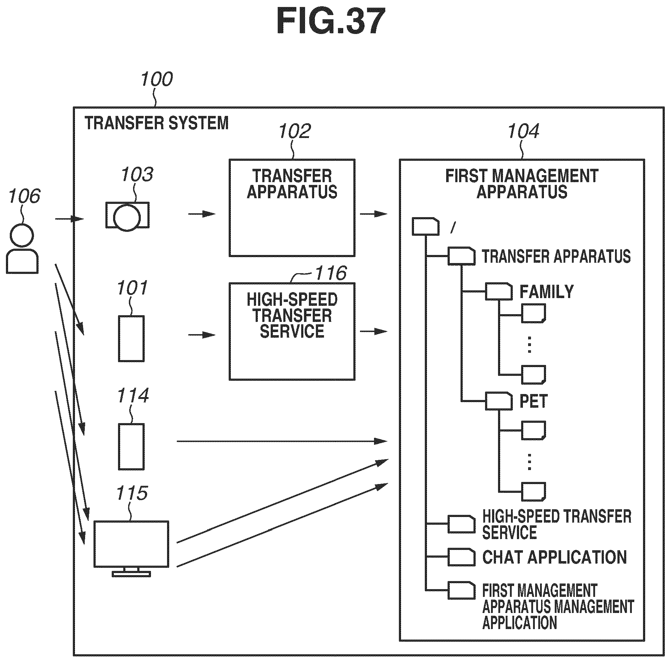

Figs. 37 to 41 are conceptual diagrams illustrating an effect according to the present embodiment. With the configuration in each diagram, image sorting suitable for usage scenes of management apparatus from the first management apparatus 104 to the fifth management apparatus 112 and user's purpose is able to be realized.

### <Effect to Be Obtained in a Case of Transferring Image to First Management Apparatus 104>

Fig. 37 is a conceptual diagram of the transfer system 100 according to an embodiment of the present disclosure in a case where a management apparatus is the first management apparatus 104.

As illustrated in Fig. 37, the transfer system 100 includes the terminal 101, the transfer apparatus 102, the imaging apparatus 103, the first management apparatus 104, terminals 114 and 115, and a high-speed transfer service 116.

The terminal 114 is a terminal such as a smartphone, a tablet, or a PC on which a chat application is mounted.

The terminal 115 is a terminal such as a smartphone, a tablet, or a PC on which a management application of the first management apparatus 104 is mounted.

The high-speed transfer service 116 is a high-speed transfer service that transfers images received from the terminal 101 to the first management apparatus 104 at high speed.

In Fig. 37, the first management apparatus 104 is a storage service that receives data transfer from a plurality of transfer source services.

The user 106 is a user who considers that he/she desires to sort images by transfer source service in the first management apparatus 104. Furthermore, in a case where the user 106 desires to sort images also by sorting condition and transfer the images, the user 106 is a user who considers that he/she desires to sort and manage images by transfer source service and by sorting condition name.

When images are transferred to the first management apparatus 104, in a case where sorting transfer is not set, the transfer apparatus 102 transfers images to a folder with a transfer source service name that exists immediately below a storage region allocated to the user. On the other hand, in a case where sorting transfer is set, the transfer apparatus 102 transfers images to a folder with a sorting condition name that exists below the folder with the transfer source service name that exists immediately below the storage region allocated to the user. Thus, the transfer apparatus 102 is able to transfer images to a storage destination desired by the user.

### <Effect to Be Obtained in a Case of Transferring Image to Second Management Apparatus 105>

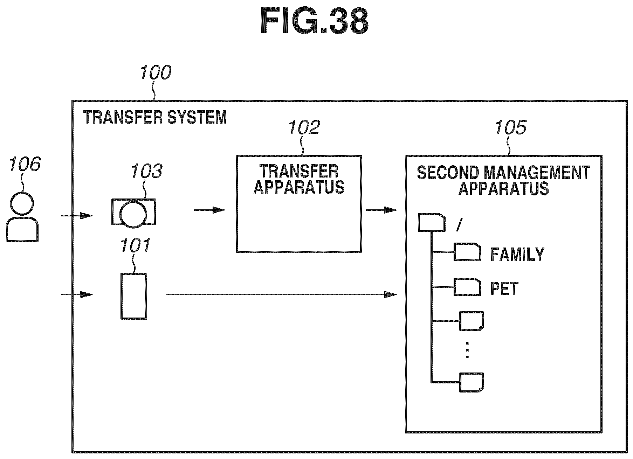

Fig. 38 is a conceptual diagram of the transfer system 100 according to an embodiment of the present disclosure in a case where a management apparatus is the second management apparatus 105.

As illustrated in Fig. 38, the transfer system 100 includes the terminal 101, the transfer apparatus 102, the imaging apparatus 103, and the second management apparatus 105.

In Fig. 38, the second management apparatus 105 is a photograph management service that receives images of the user 106.

The user 106 transfers images to the second management apparatus 105 from the transfer apparatus 102 and the terminal 101. Because a number of transfer source services are not used, the user 106 is a user who does not feel the need to sort images by transfer source service as in the case of the first management apparatus 104. In addition, the user 106 is a user who considers that he/she desired to manage images in a region immediately below a storage region allocated to the user. Furthermore, the user 106 is a user who considers that in a case where the user 106 desires to sort images also by sorting condition and transfer images, he/she desired to manage images with being sorted by sorting condition name.

When images are transferred to the second management apparatus 105, in a case where sorting transfer is not set, the transfer apparatus 102 transfers images to a region immediately below a storage region allocated to the user. On the other hand, in a case where sorting transfer is set, the transfer apparatus 102 transfers images to a folder with a sorting condition name that exists immediately below the storage region allocated to the user. Thus, the transfer apparatus 102 is able to transfer images to a storage destination desired by the user.

### <Effect to Be Obtained in a Case of Transferring Image to Third Management Apparatus 110>

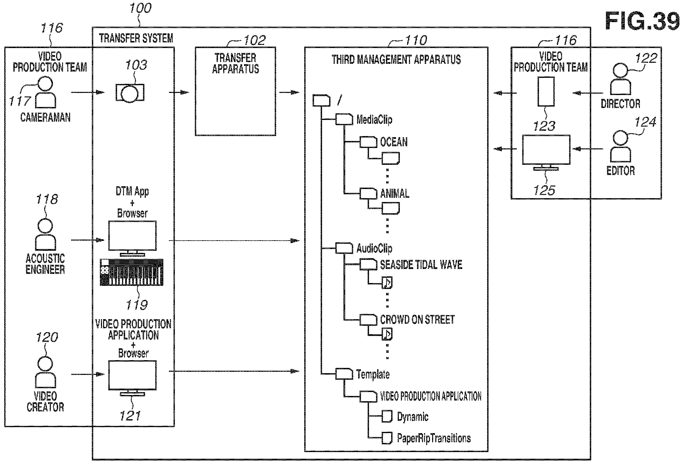

Fig. 39 is a conceptual diagram of the transfer system 100 according to an embodiment of the present disclosure in a case where a management apparatus is the third management apparatus 110.

As illustrated in Fig. 39, the transfer system 100 includes the transfer apparatus 102, the imaging apparatus 103, the third management apparatus 110, and terminals 119, 121, 123, and 125.

A video production team 116 is a video production team that produces videos. A cameraman 117, an acoustic engineer 118, a video creator 120, a director 122, and an editor 124 belong to the video production team 116. A single person is assigned to a single role, but the same person may be assigned to a plurality of roles, or a plurality of persons may be assigned to a single role.

The cameraman 117 is a cameraman who captures images using the imaging apparatus 103. The cameraman 117 transmits an instruction to transfer images to the third management apparatus 110, to the imaging apparatus 103.

The acoustic engineer 118 is an acoustic engineer assigned to produce sound to be added to videos, using the terminal 119. The acoustic engineer 118 transmits an instruction to transmit acoustic data to the third management apparatus 110, to the terminal 119.

The terminal 119 is a terminal that generates acoustic data based on an instruction from the acoustic engineer 118. A DeskTop Music (DTM) application is mounted on the terminal 119, and the terminal 119 is connected with a musical instruments digital interface (MIDI) keyboard. Furthermore, a web browser for transmitting acoustic data to the third management apparatus 110 is mounted.

The video creator 120 is a video creator that creates videos using the terminal 121.

The terminal 121 is a terminal that generates material data and effect data of videos based on an instruction from the video creator 120.

The director 122 is a director who leads the video production team 116. The director 122 issues check and amendment instructions of produced videos using the terminal 123.

The terminal 123 is a terminal that displays videos stored in the third management apparatus 110, based on an instruction from the director 122. A web browser for communicating with the third management apparatus 110 is mounted, and the terminal 123 is able to acquire videos stored in the third management apparatus 110 and add comments to the videos, based on an instruction from the director 122.

The editor 124 is an editor who produces video works by combining materials for video production that are stored in the third management apparatus 110.

The terminal 125 is a terminal for producing video works from materials for video production that are stored in the third management apparatus 110, based on an instruction from the editor 124.

In Fig. 39, the third management apparatus 110 is a video production support service that is able to receive data transfer from a plurality of transfer source services, manage a data storage destination based on a predetermined name, and further manage data in hierarchical folders.

A member of the video production team 116 is a user who considers that he/she desires to manage data in a region below a folder with a transfer source service name or a predetermined folder name that exists immediately below a storage region allocated to the video production team 116, in the third management apparatus 110. Furthermore, the user is a user who considers that in a case where the user desires to sort data also by sorting condition and transfer the data, he/she desired to manage data with being sorted into folders with sorting condition names that exist under folders with a transfer source service name or a predetermined folder name.

When images are transferred to the third management apparatus 110, in a case where sorting transfer is not set, the transfer apparatus 102 transfers images to a folder with a transfer source service name or a folder with a predetermined folder name that exists immediately below a storage region allocated to the user. On the other hand, in a case where sorting transfer is set, the transfer apparatus 102 transfers images to a folder with a sorting condition name below the folder with the transfer source service name or the folder with the predetermined folder name that exists immediately below the storage region allocated to the user. Accordingly, the transfer apparatus 102 is able to transfer images to a storage destination desired by the user.

### <Effect to Be Obtained in a Case of Transferring Image to Fourth Management Apparatus 111>

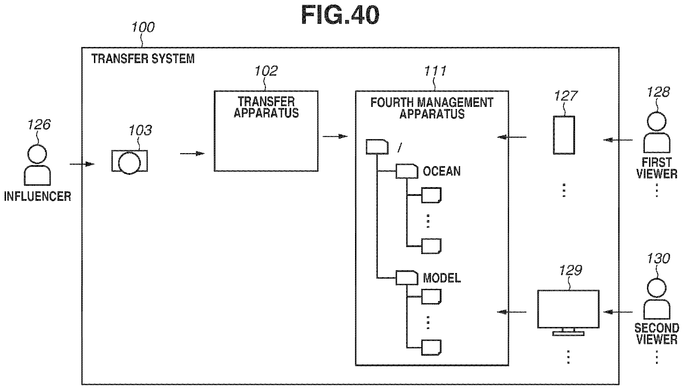

Fig. 40 is a conceptual diagram of the transfer system 100 according to an embodiment of the present disclosure in a case where a management apparatus is the fourth management apparatus 111.

As illustrated in Fig. 40, the transfer system 100 includes the transfer apparatus 102, the imaging apparatus 103, the fourth management apparatus 111, and terminals 127 and 129.

An influencer 126 is an influencer who transmits an image transmission instruction to the imaging apparatus 103.

The terminal 127 is a terminal such as a smartphone or a tablet that acquires an image from the fourth management apparatus 111, and displays the image, based on an instruction from a first viewer 128.

The first viewer 128 is a first viewer who views images posted by the influencer 126 on the transfer apparatus 102, by using the terminal 127.

The terminal 129 is a terminal such as a PC that acquires an image from the fourth management apparatus 111 and displays the image, based on an instruction from a second viewer 130.

The second viewer 130 is a second viewer who views images posted by the influencer 126 on the transfer apparatus 102, by using the terminal 129.

In Fig. 40, the fourth management apparatus 111 is a microblog service that receives posting of an image from the user, and receives a view request of the image, from a large indefinite number of users. That is, the fourth management apparatus 111 has a data publishing function.

Because the influencer 126 stores images in the fourth management apparatus 111 for a long period of time, the influencer 126 is a user who considers that he/she desires not to store images immediately below an allocated storage region. In addition, the influencer 126 is a user who considers that he/she also desires to manage images with being sorted into folders with transfer source service names or sorting condition names.

When images are transferred to the fourth management apparatus 111, in a case where sorting transfer is not set, the transfer apparatus 102 transfers images to a folder with a transfer source service name that exists immediately below a storage region allocated to the user. On the other hand, in a case where sorting transfer is set, the transfer apparatus 102 transfers images to a folder with a sorting condition name that exists immediately below a storage region allocated to the user. Thus, the transfer apparatus 102 is able to transfer images to a storage destination desired by the user.

### <Effect to Be Obtained in a Case of Transferring Image to Fifth Management Apparatus 112>

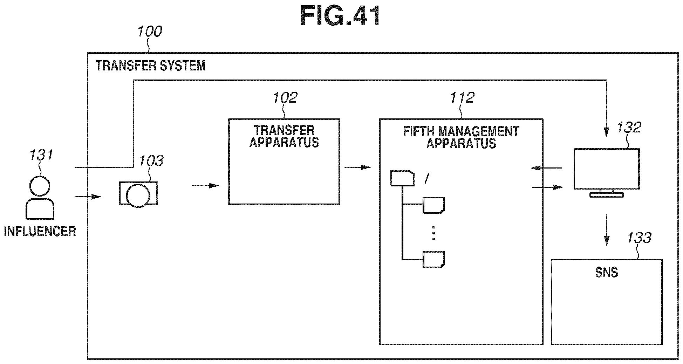

Fig. 41 is a conceptual diagram of the transfer system 100 according to an embodiment of the present disclosure in a case where a management apparatus is the fifth management apparatus 112.

As illustrated in Fig. 41, the transfer system 100 includes the transfer apparatus 102, the imaging apparatus 103, the fifth management apparatus 112, a terminal 132, and a social networking service (SNS) 133.

An influencer 131 is an influencer who transfers an image captured by the imaging apparatus 103, to the fifth management apparatus 112, edits the image on the terminal 132, and posts the edited image in the SNS 133.

The terminal 132 is a terminal for editing images transferred to the fifth management apparatus 112.

The SNS 133 is an SNS that shares posted images to a large indefinite number of users.

In Fig. 41, the fifth management apparatus 112 is an image editing service having an image editing function.

Because the influencer 131 edits an image and promptly posts the image on the SNS 133 in the fifth management apparatus 112, the influencer 131 is a user who considers that sorting is unnecessary. Because the influencer 131 promptly posts an image after editing, the influencer 131 is a user who considers that there is no problem with an operation of storing images immediately below an allocated storage region and working there.

When images are transferred to the fifth management apparatus 112, regardless of a case where sorting transfer is set and a case where sorting transfer is not set, the transfer apparatus 102 transfers an image to a region immediately below a storage region allocated to the user. Accordingly, the transfer apparatus 102 is able to transfer images to a storage destination desired by the user.

### <Other Embodiments>

In the present embodiment, information that is received by the transfer apparatus 102 from the terminal 101 is images, but the information is not limited to this, and may be any data such as video, voice, character strings, three-dimensional data, or multidimensional data as long as the data is electronically-representable information. In this case, it is necessary to appropriately convert an image format into a data format and convert an image ID into a data ID.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card, and the like.

Various embodiments have been described in detail above but it will be understood that the present disclosure is not limited to these embodiments solely and encompasses all modifications, variants, alternatives and equivalents falling within the scope of the appended claims. Although embodiments discuss images the disclosure is not limited to images only and other data and file types may be considered. Each discussed embodiment above can be implemented solely or as a combination of a plurality of the embodiments or features thereof where necessary or where the combination of elements or features from individual embodiments in a single embodiment is beneficial.

## Claims

1. A transfer apparatus (102) configured to receive data transmitted from a terminal (101) and configured to transfer the data to a management apparatus (104) which is configured to manage the data, the transfer apparatus comprising:
transfer setting holding means (432) configured to hold a transfer setting configured to associate the management apparatus to which data is to be transferred;
transfer sorting setting holding means (435) configured to hold a transfer sorting setting of the data;
storage destination determination means (424) configured to determine a storage destination of the data based on the transfer setting and the transfer sorting setting; and
transfer means (425) configured to transfer the data to a predetermined storage destination based on the transfer setting and the transfer sorting setting.

2. The transfer apparatus according to claim 1, wherein the transfer setting includes at least one of an identifier and an endpoint of the management apparatus.

3. The transfer apparatus according to claim 1 and claim 2, wherein the transfer sorting setting at least includes information indicating whether to execute sorting when the data is transferred to the management apparatus, and a sorting condition name.

4. The transfer apparatus according to any one of claims 1 to 3, wherein, in a case where a transfer destination management apparatus of the data is a first management apparatus, and in a case where sorting is executed, the storage destination determination means is configured to generate a storage destination that is identified based on a transfer source service name and a sorting condition name, and in a case where sorting is not executed, the storage destination determination means is configured to generate a storage destination that is identified based on a transfer source service name.

5. The transfer apparatus according to claim 4, wherein the first management apparatus is a service that receives data transfer from a plurality of transfer source services.

6. The transfer apparatus according to any one of claims 1 to 3, wherein, in a case where a transfer destination management apparatus of the data is a second management apparatus, and in a case where sorting is executed, the storage destination determination means is configured to generate a storage destination that is identified based on a sorting condition name, and in a case where sorting is not executed, the storage destination determination means is configured to set a storage destination that is immediately below a storage destination.

7. The transfer apparatus according to claim 6, wherein the second management apparatus stores data into a storage destination with a sorting condition name in a case where the number of transfer source services is one and sorting is executed.

8. The transfer apparatus according to any one of claims 1 to 3, wherein, in a case where a transfer destination management apparatus of the data is a third management apparatus, and in a case where sorting is executed, the storage destination determination means is configured to generate a storage destination that is identified based on a transfer source service name and a sorting condition name, or a storage destination that is identified based on a predetermined character string and a sorting condition name, and in a case where sorting is not executed, the storage destination determination means is configured to generate a storage destination that is identified based on a transfer source service name, or a storage destination that is identified based on a predetermined character string.

9. The transfer apparatus according to claim 8, wherein the third management apparatus receives data transfer from a plurality of transfer source services, manages a storage destination of the data based on a predetermined name, and further stores data based on a sorting condition name in a storage destination with a predetermined name.

10. The transfer apparatus according to any one of claims 1 to 3, wherein, in a case where a transfer destination management apparatus of the data is a fourth management apparatus, and in a case where sorting is executed, the storage destination determination means is configured to generate a storage destination that is identified based on a sorting condition name, and in a case where sorting is not executed, the storage destination determination means is configured to generate a storage destination that is identified based on a transfer source service name.

11. The transfer apparatus according to claim 10, wherein the fourth management apparatus has a function of posting the data.

12. The transfer apparatus according to any one of claims 1 to 3, wherein, in a case where a transfer destination management apparatus of the data is a fifth management apparatus, irrespective of whether sorting is executed, the storage destination determination means is configured to set a storage destination that is immediately below a storage destination.

13. The transfer apparatus according to claim 12, wherein the fifth management apparatus has a function of editing the data.

14. The transfer apparatus according to any one of claims 1 to 3, wherein, in a case where a transfer destination management apparatus of the data is a sixth management apparatus, irrespective of whether sorting is executed, the storage destination determination means is configured to determine not to change a storage destination.

15. The transfer apparatus according to any one of claims 1 to 14, wherein the transfer means is configured to check whether a storage destination folder exists in a transfer destination management apparatus, each time the data is transmitted.

16. The transfer apparatus according to any one of claims 1 to 15,
wherein, when a storage destination is created in the management apparatus, in a case where a storage destination creation trial has succeeded, the storage destination determination means is configured to acquire exclusive control right of the storage destination, and
wherein, in a case where storage destination creation trial has failed, the storage destination determination means is configured to acquire a storage destination identifier of the storage destination from the transfer setting holding means and configured to set a folder corresponding to the storage destination identifier as a storage destination.

17. The transfer apparatus according to any one of claims 1 to 16, further comprising:
user holding means configured to hold user information regarding a user,
wherein the transfer setting holding means is configured to hold a storage destination identifier set when a storage destination has been used in the past, with being associated with user information and transfer destination information, and in a case of a setting of not performing sorting, the storage destination determination means acquires the storage destination identifier from the transfer setting holding means, and configured to set a storage destination corresponding to the acquired storage destination identifier as a storage destination of the data.

18. The transfer apparatus according to any one of claims 1 to 17, further comprising:
transfer control means configured to control the storage destination determination means and the transfer means based on the transfer setting,
wherein, in a case where data is transferred to a fourth management apparatus, after the data is transferred by the transfer means, the transfer control means is configured to generate a storage destination of the data by the storage destination determination means, and configured to associate the transferred data and the storage destination.

19. A transfer system that receives data transmitted from a terminal and transfers the data to a management apparatus for managing the data, the transfer system comprising:
transfer setting holding means configured to hold a transfer setting to the management apparatus;
transfer sorting setting holding means configured to hold a transfer sorting setting of the data;
storage destination determination means configured to determine a storage destination of the data based on the transfer setting and the transfer sorting setting; and
transfer means configured to transfer the data to a predetermined storage destination based on the transfer setting and the transfer sorting setting.

20. A transfer method of receiving data transmitted from a terminal and transferring the data to a management apparatus for managing the data, the transfer method comprising:
holding, as transfer setting holding, a transfer setting to the management apparatus;
holding, as transfer sorting setting holding, a transfer sorting setting of the data;
determining, as storage destination determining, a storage destination of the data based on the transfer setting and the transfer sorting setting; and
transferring the data to a predetermined storage destination based on the transfer setting and the transfer sorting setting.

21. A non-transitory storage medium storing a program causing a transfer apparatus to execute a transfer method of receiving data transmitted from a terminal and transferring the data to a management apparatus for managing the data, the transfer method comprising:
holding, as transfer setting holding, a transfer setting to the management apparatus;
holding, as transfer sorting setting holding, a transfer sorting setting of the data;
determining, as storage destination determining, a storage destination of the data based on the transfer setting and the transfer sorting setting; and
transferring the data to a predetermined storage destination based on the transfer setting and the transfer sorting setting.
